(19) **Europäisches Patentamt**
**European Patent Office**
**Office européen des brevets**

(11) **EP 4 557 184 A1**

(12) **EUROPEAN PATENT APPLICATION**
published in accordance with Art. 153(4) EPC

(43) Date of publication:
**21.05.2025  Bulletin 2025/21**

(21) Application number: **23842066.5**

(22) Date of filing: **29.06.2023**

(51) International Patent Classification (IPC):
***G06N 20/00*** (2019.01)

(52) Cooperative Patent Classification (CPC):
**G06N 20/00; H04L 41/14**

(86) International application number:
**PCT/CN2023/104254**

(87) International publication number:
**WO 2024/017001 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **21.07.2022  CN 202210872876**

(71) Applicant: **Huawei Technologies Co., Ltd.**
**Shenzhen, Guangdong 518129 (CN)**

(72) Inventors:
• **CHEN, Hongzhi**
  **Shenzhen, Guangdong 518129 (CN)**
• **LIU, Lifu**
  **Shenzhen, Guangdong 518129 (CN)**
• **SUN, Yan**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **MODEL TRAINING METHOD AND COMMUNICATION APPARATUS**

(57)     This application provides a model training method and a communication apparatus, and relates to the communication field. The model training method includes: receiving, from a plurality of child node devices, capability information that represents capabilities of training a model by the child node devices; sending, to each of the plurality of child node devices, the model and first indication information indicating first model parameters to be updated when the child node devices train the model; receiving updated first model parameters from the plurality of child node devices; fusing global model parameters of the plurality of child node devices by using a preset fusion algorithm, to obtain a fused parameter; and sending the fused parameter to the plurality of child node devices. This resolves a problem of low efficiency of model training using an existing federated learning architecture.

FIG. 8

# Description

This application claims priority to Chinese Patent Application No. 202210872876. X, filed with the China National Intellectual Property Administration on July 21, 2022 and entitled "MODEL TRAINING METHOD AND COMMUNICATION APPARATUS", which is incorporated herein by reference in its entirety.

## TECHNICAL FIELD

This application relates to the communication field, and in particular, to a model training method and a communication apparatus.

## BACKGROUND

Based on a conventional federated learning architecture, because each child node device needs to download a unified model from a central node device for local training, model training efficiency is limited by a child node device with a lowest capability due to different capabilities of child node devices, and the model training efficiency is low.

## SUMMARY

This application provides a model training method and a communication apparatus, to resolve an existing problem that efficiency of model training using federated learning is low.

To achieve the foregoing objective, this application uses the following technical solutions.

According to a first aspect, this application provides a model training method. The method is applied to a central node device, and the method includes: receiving, from a plurality of child node devices (child node devices that participate in federated learning of a model), capability information representing capabilities of training the model by the child node devices; sending, to each of the plurality of child node devices, the model and first indication information indicating a first model parameter (determined based on capability information of the child node device) to be updated when the child node device trains the model; receiving updated first model parameters from the plurality of child node devices; fusing global model parameters (including the updated first model parameters and second model parameters other than the first model parameters in the model) of the plurality of child node devices by using a preset fusion algorithm, to obtain a fused parameter; and sending the fused parameter to the plurality of child node devices.

In the first aspect, the plurality of child node devices first send the capability information to the central node device, and then the central node device sends the first indication information and the model to each of the plurality of child node devices based on the capability information. Then, the plurality of child node devices train the model based on training sets and to-be-updated model parameters, to obtain the updated first model parameters. In addition, the central node device fuses, by using the preset fusion algorithm, the global model parameters that include the first model parameters and that are of the plurality of child node devices, to obtain the fused parameter; and then the plurality of child node devices train the model based on the fused parameter. In this way, when the child node device trains the model, a part of parameters are frozen and do not participate in training. Therefore, during model training, a model training progress is not affected by a central node device with a low computing power, and model training efficiency is high.

In a possible implementation, the method further includes: separately predicting model training durations of the plurality of child node devices based on the capability information; and determining the first model parameters of the child node devices based on the model training durations.

In this implementation, the model training durations of the plurality of child node devices are first separately predicted based on the capability information, and then the first model parameters of the child node devices are determined based on the model training durations, so that the determined to-be-trained first model parameters can match the corresponding child node devices, and the model training progress is ensured.

In a possible implementation, the determining the first model parameters of the child node devices based on the model training durations includes: when the model training durations do not meet a preset duration condition, selecting a part of parameters of the model as the first model parameters; or when the model training durations meet a preset duration condition, selecting all parameters of the model as the first model parameters.

In this implementation, based on different comparison results between the model training duration and the preset duration condition, two policies are correspondingly used: selecting the part of parameters of the model as the first model parameters, and selecting all the parameters of the model as the first model parameters, so that model performance is ensured while the model training progress is ensured.

In a possible implementation, the selecting a part of parameters of the model as the first model parameter includes: randomly selecting the part of parameters of the model as the first model parameters.

In this implementation, the part of parameters of the model are randomly selected as the first model parameters, so that the determined to-be-trained first model parameter can match a corresponding child node device, and the model training progress is ensured.

In a possible implementation, the model includes a first network layer (where a model application scenario indicates the first network layer) and a second network layer, and the first network layer and the second network layer are different; and the selecting a part of parameters of the model as the first model parameter includes:

selecting parameters of the first network layer and a part of parameters of the second network layer as the first model parameters.

In this implementation, the parameters of the first network layer and the part of parameters of the second network layer are specifically selected as the first model parameters, so that a requirement of the model application scenario on a network layer is considered, and model training performance is ensured.

In a possible implementation, before selecting parameters of a preset first network layer in the first network layer are selected as the first model parameters, the method further includes:

determining, based on the model application scenario, the first network layer required for constructing the model.

In this implementation, the central node device determines, based on the model application scenario, the first network layer required for constructing the model, so that the requirement of the model application scenario on the network layer is considered, and the model training performance is ensured.

In a possible implementation, the capability information further represents types of models that can be trained by the child node devices, and the method further includes:

determining a child node device whose capability information includes a model type of the model as a target device to which the first indication information and the model are sent.

In this implementation, the child node device whose capability information includes the model type of the model is determined as the target device to which the first indication information and the model are sent, so that it is ensured that all child node devices that participate in training can train the model, and the model training progress is ensured.

In a possible implementation, the fusing global model parameters of the plurality of child node devices by using a preset fusion algorithm, to obtain a fused parameter includes:

for model parameters with a same function of different child node devices, setting weights of the second model parameters to a first preset weight value, setting weights of the first model parameters to a second preset weight value, and performing weighted averaging to obtain the fused parameter; or for model parameters with a same function of different child node devices, setting both weights of the second model parameters and weights of the first model parameters to a second preset weight value, and performing weighted averaging to obtain the fused parameter.

In this implementation, it is designed that the second model parameter cannot affect the preset fusion algorithm of the fused parameter, and cannot participate in calculation of the fused parameter, so that the second model parameter that is not updated cannot affect model training, and the model training performance is ensured. It is further designed that the second model parameter can affect the preset fusion algorithm of the fused parameter, and can participate in calculation of the fused parameter, so that the determined fused parameter can participate in model training, and the model training progress is ensured.

According to a second aspect, this application provides a beam information selection method. The method is applied to a child node device, and includes: receiving beam information; and inputting the beam information into a model (obtained through training according to the method in the first aspect), and outputting target beam information.

In the second aspect, a target beam is selected by using the model, and efficiency of selecting the target beam is high.

According to a third aspect, this application provides a model training method. The method is applied to a child node device, and includes:

sending, to a central node device, capability information representing a capability of training a model by the child node device; receiving, from the central node device, the model and first indication information indicating a first model parameter to be updated when the child node device trains the model, where the to-be-updated first model parameter of the child node device is determined based on the capability information of the child node device; training the model based on the to-be-updated model parameter and a training set including beam information collected by the child node device, to obtain an updated first model parameter; sending the updated first model parameter to the central node device; receiving, from the central node device, a fused parameter calculated based on the updated first model parameter; and training the model based on the fused parameter.

According to a fourth aspect, this application provides a communication apparatus. The communication apparatus may be a chip or a system on chip of a central node device, and includes:

a receiving module, configured to receive, from a plurality of child node devices (child node devices that participate in federated learning of a model), capability information representing capabilities of training the model by the child node devices; a sending module, configured to send, to each of the plurality of child node devices, the model and first indication information indicating a first model parameter to be updated when the child node device trains the model, where the to-be-updated first model parameter of the child node device is determined based on capability information of the child node device, where the receiving module is further configured to receive updated first model parameters from the plurality of child node devices; and a processing module, configured to fuse global model parameters of the plurality of child node devices by using a preset fusion algorithm, to obtain a fused parameter, where the global model parameters include the updated first model parameters and second model parameters other than the first model parameters in the model, where the sending module is configured to send the fused parameter to the plurality of child node devices.

In a possible implementation, the processing module is specifically configured to:

separately predict model training durations of the plurality of child node devices based on the capability information; and determine the first model parameters of the child node devices based on the model training durations.

In a possible implementation, the processing module is specifically configured to:

when the model training durations do not meet a preset duration condition, select a part of parameters of the model as the first model parameters; or when the model training durations meet a preset duration condition, select all parameters of the model as the first model parameters.

In a possible implementation, the processing module is specifically configured to:

randomly select the part of parameters of the model as the first model parameters.

In a possible implementation, the model includes a first network layer and a second network layer, a model application scenario indicates the first network layer, and the first network layer and the second network layer are different; and the processing module is specifically configured to select parameters of the first network layer and a part of parameters of the second network layer as the first model parameters.

In a possible implementation, the processing module is further configured to:

before selecting parameters of a preset first network layer in the first network layer as the first model parameters, determine, based on the model application scenario, the first network layer required for constructing the model.

In a possible implementation, the capability information further represents types of models that can be trained by the child node devices, and the processing module is further configured to:

determine a child node device whose capability information includes a model type of the model as a target device to which the first indication information and the model are sent.

In a possible implementation, the processing module is specifically configured to:

for model parameters with a same function of different child node devices, set weights of the second model parameters to a first preset weight value, set weights of the first model parameters to a second preset weight value, and perform weighted averaging to obtain the fused parameter; or for model parameters with a same function of different child node devices, set both weights of the second model parameters and weights of the first model parameters to a second preset weight value, and perform weighted averaging to obtain the fused parameter.

According to a fifth aspect, this application provides a communication apparatus. The communication apparatus may be a chip or a system on chip of a child node device, and includes:

a receiving module, configured to receive beam information; and a processing module, configured to: input the beam information into a model, and output target beam information, where the model is obtained through training by the communication apparatus according to the fourth aspect.

According to a sixth aspect, this application provides a communication apparatus. The communication apparatus may be a chip or a system on chip of a child node device, and includes:

a sending module, configured to send, to a central node device, capability information representing a capability of training a model by the child node device; a receiving module, configured to receive, from the central node device, the model and first indication information indicating a first model parameter to be updated when the child node device trains the model, where the to-be-updated first model parameter of the child node device is determined based on the capability information of the child node device; and a processing module, configured to train the model based on a training set (including beam information collected by the child node device) and the to-be-updated model parameter, to obtain an updated first model parameter, where the sending module is configured to send the updated first model parameter to the central node device; the receiving module is configured to receive, from the central node device, a fused parameter calculated based on the updated first model parameter; and the processing module is configured to train the model based on the fused parameter.

According to a seventh aspect, this application provides a communication apparatus. The communication apparatus includes a processor and a transceiver, and the processor and the transceiver are configured to support the communication apparatus in performing the method according to the first aspect, the second aspect, or the third aspect. The communication apparatus may further include a memory. The memory stores computer instructions, and the processor may run the computer instructions to perform the method according to the first aspect, the second aspect, or the third aspect.

According to an eighth aspect, this application provides a computer-readable storage medium. The computer-readable storage medium stores computer instructions. When the computer instructions are run, the method according to the first aspect, the second aspect, or the third aspect is performed.

According to a ninth aspect, this application provides a computer program product including instructions. When the computer program product runs on a computer, the computer may perform the method according to the first aspect, the second aspect, or the third aspect.

According to a tenth aspect, this application provides a chip. The chip includes a processor and a transceiver, and the processor and the transceiver are configured to support a communication apparatus in performing the method according to the first aspect, the second aspect, or the third aspect.

For beneficial effect described in the fourth aspect to the tenth aspect of this application, correspondingly refer to beneficial effect analysis in the first aspect to the third aspect. Details are not described herein again.

## BRIEF DESCRIPTION OF DRAWINGS

FIG. 1 is a diagram of a structure of a neuron according to an embodiment of this application;

FIG. 2 is a diagram of a neural network structure of a DNN according to an embodiment of this application;

FIG. 3 is a diagram of a system architecture of classic federated learning according to an embodiment of this application;

FIG. 4-a is a schematic flowchart of federated learning according to an embodiment of this application;

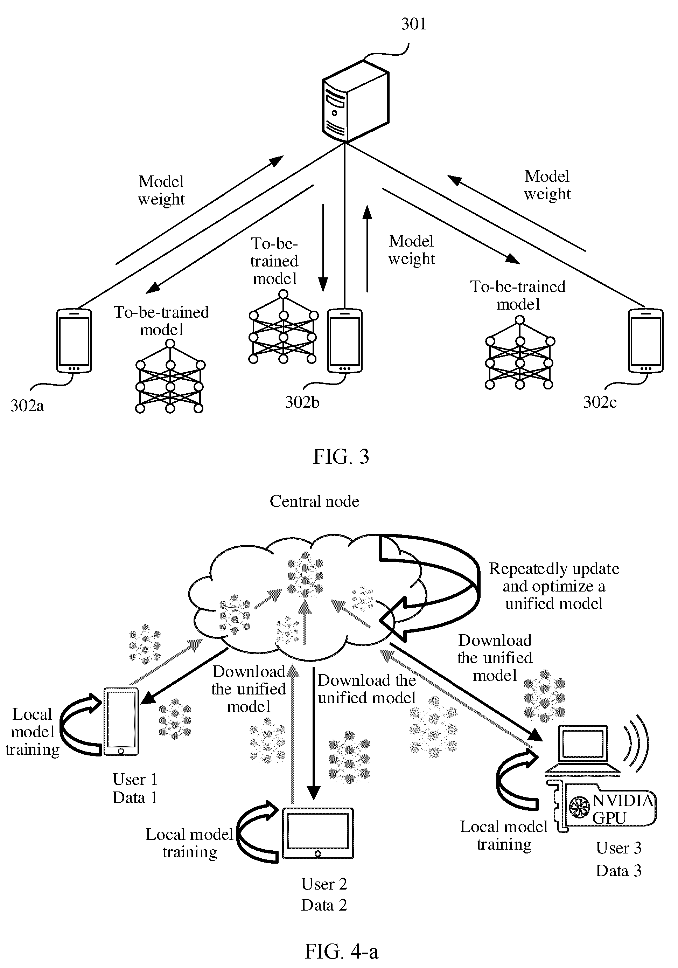

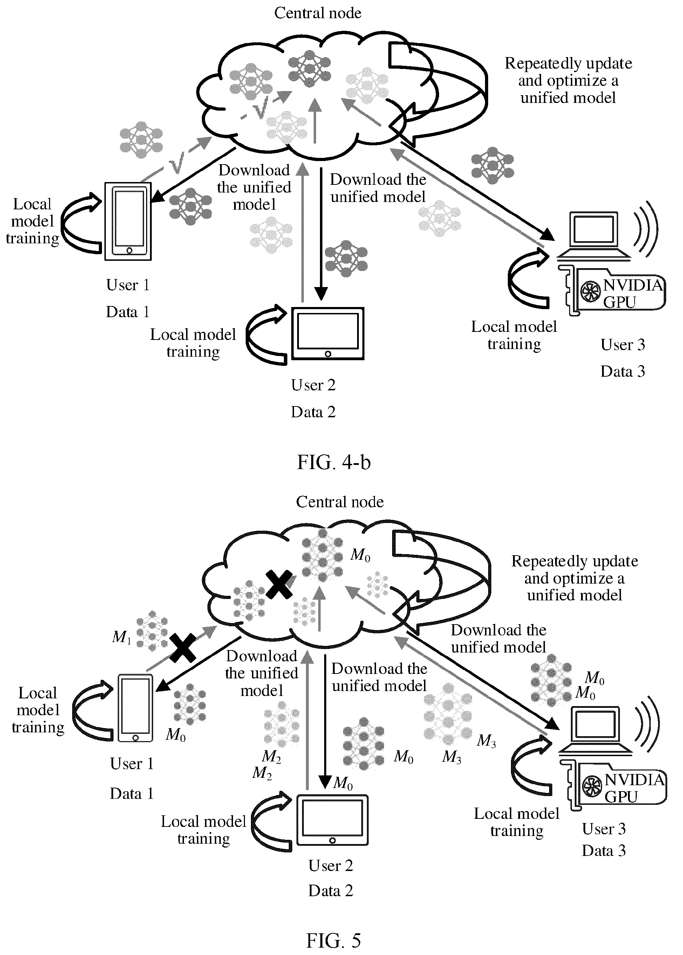

FIG. 4-b is another schematic flowchart of federated learning according to an embodiment of this application;

FIG. 5 is another schematic flowchart of federated learning according to an embodiment of this application;

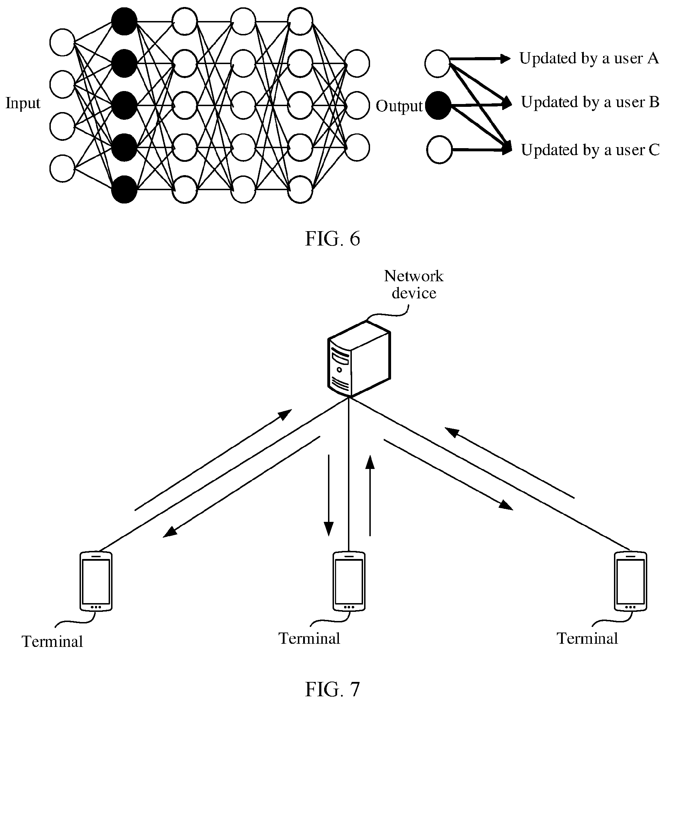

FIG. 6 is a diagram of a differentiated network parameter update principle according to an embodiment of this application;

FIG. 7 is a diagram of a communication system according to an embodiment of this application;

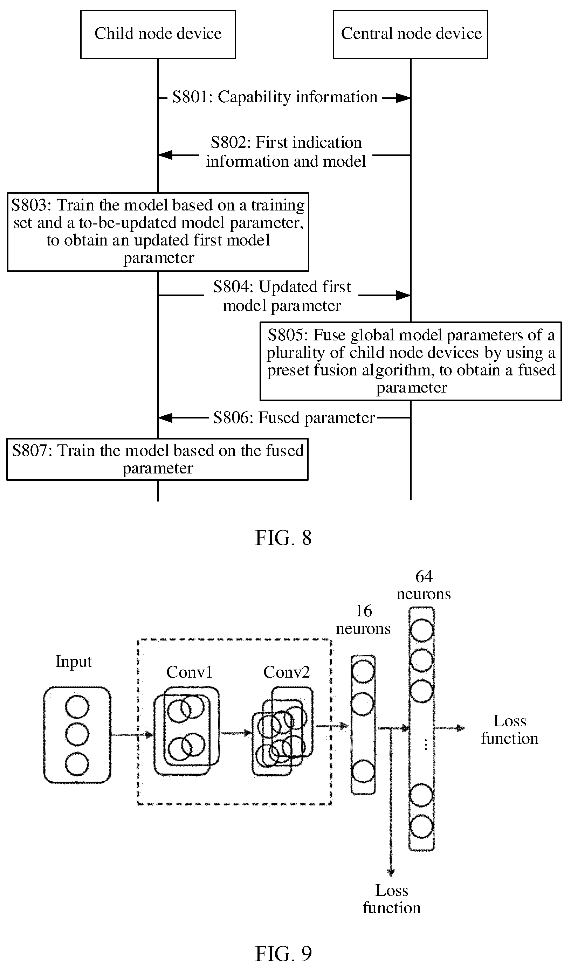

FIG. 8 is a schematic flowchart of a model training method according to an embodiment of this application;

FIG. 9 is a diagram of a network structure of a model according to an embodiment of this application;

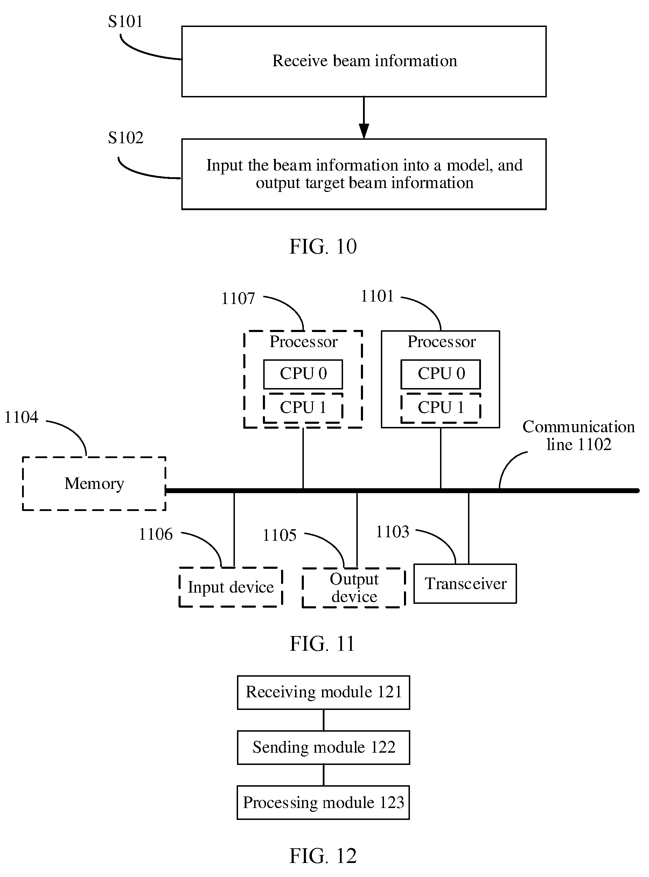

FIG. 10 is a schematic flowchart of another model training method according to an embodiment of this application;

FIG. 11 is a diagram of a structure of a communication apparatus according to an embodiment of this application;

FIG. 12 is a diagram of a structure of another communication apparatus according to an embodiment of this application;

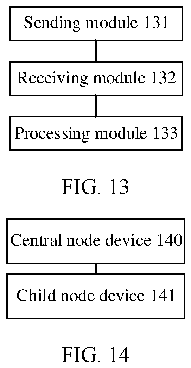

FIG. 13 is a diagram of a structure of another communication apparatus according to an embodiment of this application; and

FIG. 14 is a diagram of a structure of a communication system according to an embodiment of this application.

## DESCRIPTION OF EMBODIMENTS

The following describes technical solutions in embodiments of this application with reference to accompanying drawings in embodiments of this application. Unless otherwise specified, "/" in descriptions of this application represents an "or" relationship between associated objects. For example, A/B may represent A or B. In this application, "and/or" is merely an association relationship for describing associated objects, and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described with "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

Before embodiments of this application are described, some terms in embodiments of this application are explained.

Artificial intelligence is to enable machines to have human intelligence, and use computer software and hardware to simulate some intelligent human behavior.

Artificial intelligence includes machine learning and many other methods.

Machine learning is to learn of a model or rule from raw data. There are many different machine learning methods, such as methods using a neural network, a decision tree, and a support vector machine.

An AI model herein is a function model that maps an input of a specific dimension to an output of a specific dimension. A model parameter of the AI model is obtained through machine learning training. For example, $f(x)=ax^2+b$ is a quadratic function model, and may be considered as an AI model. a and b are correspondingly parameters of the model, and may be obtained through machine learning training.

A neural network herein is an artificial neural network, is a mathematical model that performs distributed parallel information processing by simulating behavioral characteristics of animal neural networks, and is a special form of an AI model.

A dataset includes data used for model training, verification, and testing in machine learning. An amount and quality of the data affect machine learning effect.

Model training is to select an appropriate loss function and use an optimization algorithm to train a model parameter, to minimize a loss function value.

A loss function is used to measure a difference between a predicted value and an actual value of a model.

Model testing is to use test data to evaluate model performance after training.

Model application is to use a trained model to resolve a practical problem.

Building a new generation of information infrastructures that adapt to Internet of Everything in an intelligent society and ensuring security of the information infrastructures are of great significance in promoting integration of information technologies and real economy and expanding space of digital economy. Currently, there is a global wave of application for artificial intelligence (Artificial Intelligence, AI). In a 5th generation mobile communication system (5th Generation Mobile Communication Technology, 5G) network, a plurality of service modes coexist, and an application environment is complex and changeable. Conventional manners of static configuration, manual maintenance, and a single service capability cannot meet requirements of 5G. Introducing AI to 5G and future communication systems can provide data-based perception, prediction, and management and control capabilities for information infrastructures such as networks, computing, and applications, to promote integration and collaboration of the infrastructures such as the networks, computing, and applications. In more and more complex scenarios, AI can make better decisions than humans. This undoubtedly opens up a new vision for intelligent network construction, brings new opportunities for network development, and provides efficient accelerated solutions to numerous difficulties and challenges encountered during telecommunications network reconstruction and transformation.

Machine learning (Machine Learning, ML) is an important technical means of implementing artificial intelligence. Machine learning may be divided into supervised learning, unsupervised learning, and reinforcement learning.

For supervised learning, based on collected sample values and sample labels, a mapping relationship between the sample values and the sample labels is learned by using a machine learning algorithm, and the learned mapping relationship is expressed by using a machine learning model. A process of training the machine learning model is a process of learning the mapping relationship. For example, during signal detection, a received signal including noise is a sample, and a real constellation point corresponding to the signal is a label. Machine learning expects to learn a mapping relationship between the sample and the label through training, in other words, enable a machine learning model to learn a signal detector. During training, a model parameter is optimized by calculating an error between a predicted value of a model and an actual label. Once the mapping relationship is learned, a sample label of each new sample can be predicted by using the learned mapping. The mapping relationship learned through supervised learning may include a linear mapping and a non-linear mapping. Learning tasks may be classified into a classification task and a regression task based on types of labels.

For unsupervised learning, an internal pattern of a sample is explored autonomously by using an algorithm based on only a collected sample value. For a specific type of algorithm of unsupervised learning, a sample is used as a supervised signal, in other words, a model learns a mapping relationship between samples, which is referred to as self-supervised learning. During training, a model parameter is optimized by calculating an error between a predicted value of a model and a sample. Self-supervised learning may be used for signal compression and decompression restoration. Common algorithms include an autoencoder, a generative adversarial network, and the like.

Reinforcement learning is different from supervised learning, and is an algorithm that learns a policy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of reinforcement learning is also to learn a mapping relationship between an environment status and an optimal decision action. However, a label of a "correct action" cannot be obtained in advance. Therefore, a network cannot be optimized by calculating an error between an action and the "correct action". Reinforcement learning training is implemented through iterative interaction with the environment.

A deep neural network (Deep Neural Network, DNN) is a specific implementation form of machine learning, and usually uses a supervised learning or unsupervised learning policy to optimize a model parameter. According to the universal approximation theorem, a neural network can approximate any continuous function in theory, so that the neural network has a capability of learning any mapping. In a conventional communication system, a communication module needs to be designed with rich expert knowledge. However, a DNN-based deep learning communication system can automatically discover an implicit pattern structure from a large quantity of datasets, establish a mapping relationship between data, and obtain performance better than that of a conventional modeling method.

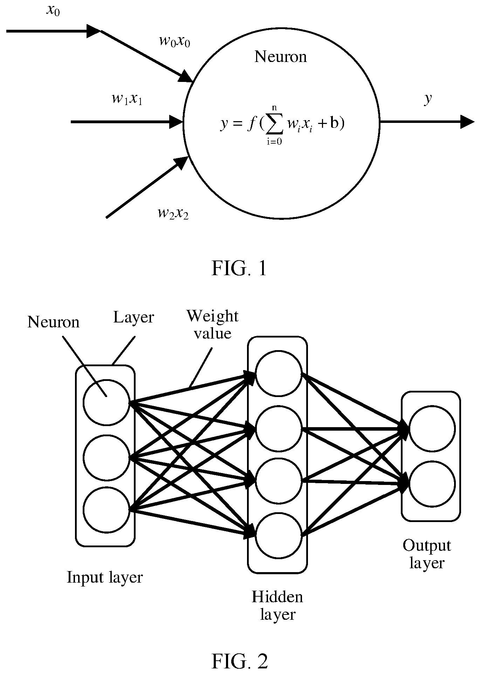

The idea of the DNN comes from a neuron structure of a brain tissue. Each neuron performs a weighted summation operation on input values of the neuron, and a weighted summation result is passed through a non-linear function to generate an output, as shown in a neuron structure shown in FIG. 1. Specifically, it is assumed that an input of the neuron is $x = [x_0, \ldots, x_n]$, a weight value corresponding to the input is $w = [w_0, \ldots, w_n]$, and a weighted summation bias is b. The non-linear function may be in diversified forms. A maximum function max{0, x} is used as an example, and corresponding execution effect of the neuron may be

$$\max\{0, \sum_{i=0}^{n} w_i x_i + \mathrm{b}\}$$

. The DNN usually has a multi-layer structure. Each layer of the DNN may include a plurality of neurons. An input layer processes a received value by using a neuron, and then transfers a processed value to an intermediate hidden layer. Similarly, the hidden layer then transfers a calculation result to a last output layer, to generate a last output of the DNN. A neural network structure of the DNN is shown in FIG. 2.

The DNN usually has more than one hidden layer, and the hidden layer usually directly affects an information extraction capability and a function fitting capability. Increasing a quantity of hidden layers of the DNN or increasing a width of each layer can improve the function fitting capability of the DNN. A weighted value in each neuron is a parameter of a DNN model. The model parameter is optimized in a training process, so that the DNN has a data feature extraction capability and a mapping relationship expression capability.

Based on network construction manners, DNNs can be classified into a feedforward neural network (Feedforward Neural Network, FNN), a convolutional neural network (Convolutional Neural Network, CNN), and a recursive neural network (Recurrent Neural Network, RNN). FIG. 2 shows an FNN, and the FNN is characterized in that neurons at adjacent layers are completely connected. Consequently, the FNN usually requires a large amount of storage space, resulting in high computational complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size rather than performing an operation by using all input information at one time, which greatly reduces a computation amount of a model parameter. In addition, based on different types of information captured through the window (for example, a person and an object in a same image are information of different types), different convolution kernel operations may be used for each window, so that the CNN can better extract a feature of input data.

The RNN is a DNN using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. As described above, each neuron performs a weighted summation operation on input values of the neuron, and a weighted summation result is passed through a non-linear function to generate an output. In this case, a weight value of the weighted summation operation of the neuron in the neural network and the non-linear function are referred to as parameters of the neural network. A neuron using a non-linear function max{0, x} is used as an example. Parameters of the neuron that performs a

$$\max\{0, \sum_{i=0}^{n} w_i x_i + \mathrm{b}\}$$

operation are a weight value $w = [w_0, \ldots, w_n]$, a weighted summation bias b, and the non-linear function max{0, x}. Parameters of all neurons in a neural network form parameters of the neural network.

For the DNN, federated learning (Federated Learning, FL) may be used for training. Federated learning is a machine learning framework, and is intended to effectively help a plurality of organizations use data and build machine learning models while meeting user privacy protection and data security requirements. In the federated learning framework, data is not transferred between nodes. Instead, an intermediate result, for example, a model parameter or a gradient, obtained through training is transferred between the nodes. FIG. 3 is a diagram of a system architecture of classic federated learning. As shown in FIG. 3, the system architecture for classic federated learning may include a central node 301 and a plurality of distributed nodes (distributed nodes 302a to 302c). The distributed nodes 302a to 302c are all in communication connection to the central node 301, and the distributed nodes 302a to 302c belong to different organizations or companies. Each of the distributed nodes 302a to 302c includes a distributed dataset about an application environment of the distributed node. As a distributed machine learning paradigm, federated learning can effectively resolve a problem of data silos. Federate learning enables participants to perform joint modeling without sharing data, and therefore can technically break down data silos and implement AI collaboration. Based on different data source distribution statues of participants, federated learning can be divided into three types: horizontal federated learning, vertical federated learning, and federated transfer learning.

Horizontal federated learning means that when two datasets have a high overlap in user features but a low overlap in users, the datasets are partitioned horizontally (that is, in a user dimension), and parts of data with a same user feature but not completely same users are extracted from the datasets for training. Vertical federated learning means that when two datasets have a high overlap in users but a low overlap in user features, the datasets are partitioned vertically (that is, in a feature dimension), and parts of data with a same user but not completely same user features are extracted from the datasets for training. Federated transfer learning means that when two datasets have a low overlap in both users and user features, data is not partitioned, and transfer learning can be used to overcome data or label insufficiency.

A high frequency beam management problem is used as an example. When a base station side performs beam sweeping on codebook-based synchronization signal and physical broadcast channel (Physical broadcast channel, PBCH) blocks, namely, synchronization signal blocks (Synchronization Signal Blocks, SSBs), or channel state information reference signals (Channel state information reference signals, CSI-RSs), channels between users at different locations and a base station are different. A user terminal (a user for short) needs to measure a parameter of a received SSB or CSI-RS beam, for example, measure a physical layer reference signal received power (L1-reference signal received power, L1-RSRP), use a beam corresponding to a maximum RSRP value as a target beam, and feed back the target beam to the base station.

The user terminal may train, through AI/ML, a model for selecting a beam. For example, the user terminal uses (some or all of) a plurality of received SSBs/CSI-RSs as an input, or uses (some or all of) strengths (RSRPs) of the plurality of received SSBs/CSI-RSs as an input, to infer a target beam ID, and feeds back the target beam ID to the base station. Each user may collect receive beam/channel information of the user and a corresponding target beam ID as a sample (that is, a local sample) for training an AL/ML model. However, a quantity of samples that can be collected by each user is limited, and the target beam ID in the training sample is merely a subset of an actual SSB/CSI-RS codebook. As a result, performance of a model obtained through training by the user using only local data is limited.

If the user sends the local data to a server, and the server summarizes data of users for model training, model performance can be improved, but there is a risk of leaking privacy information of the user, for example, information such as a current location of the user can be inferred based on a channel. To resolve this problem, federated learning can be used. In the federated learning framework, a user corresponds to a child node, and a network device corresponds to a central node. The central node delivers a global model to each user participating in federated learning. Each user uses local data to train the global model to obtain a local model, and sends parameter information of the local model, such as a gradient and a weight value (after encryption), to the network device. The network device performs model fusion (model aggression, MA) to update the global model, and then sends an updated global model to each user. The user continues to update the local model, outputs parameter information of an updated local model, and sends the parameter information to the central node. In this way, iteration is performed for a plurality of times until the model is converged.

In a conventional federated learning architecture, AI is applied to a wireless network, and training data, for example, label information, needs to be collected first. However, some local data of a user may relate to a user privacy problem. For example, in a beam management problem and a positioning scenario, a user equipment (User Equipment, UE) may collect data including a user channel, a target beam ID, a geographical location, and the like. Because data collected by a single UE may not be universal (for example, as mentioned above, because of a geographical location of a user, a target beam ID fed back by the user may be merely a subset of an entire codebook), all possible distributions of real data cannot be traversed, and an amount of data received by the single UE may be small. Consequently, it is difficult to obtain a neural network with sufficient performance through training by using only the data of the single UE. However, if all UEs send original data to a central node for unified training, extremely high air interface overheads are caused, and a privacy leakage problem may also be involved.

In the foregoing wireless communication scenario, when different UEs need to perform distributed training on data of a same type, horizontal federated learning is suitable for use. A main procedure of horizontal federated learning is as follows:

Step 1: A central node (for example, a base station or an AI network element) delivers a global model to child nodes (for example, UEs).

Step 2: Each child node uses local data to train the model, and uploads a gradient, a weight value, or a local model to the central node (after encryption); and the central node aggregates gradients or local models of the child nodes to update a parameter of the global model.

The two steps are repeated until the model is converged.

In a federated learning procedure shown in FIG. 4-a, three child nodes (users 1, 2, and 3) are used as an example. First, a central node sends an initial model (that is, a downloaded global model $M_0$ in the figure) to the child nodes. The users 1, 2, and 3 train the (global) model based on local data 1, 2, and 3 respectively, to obtain models $M_1$, $M_2$, and $M_3$; and send the models to the central node. The central node performs model fusion on the received models of the child nodes, to obtain an updated global model. For example, a fusion algorithm FedAvg (Federated averaging) is used, that is,

$$M_0 = \frac{1}{3}\sum_{k=1}^{3} M_k$$

. After the new global model is obtained, the central node sends the updated $M_0$ to the child nodes again. The child node performs a new round of local training based on the received global model, and then sends a trained model to the central node. In this way, iteration is performed until the model is converged. The user may upload the trained local model to the central node; or may upload only a network parameter of the trained local model, for example, a gradient or a weight value. The central node may restore each local model or directly fuse network parameters.

Based on the conventional federated learning architecture, because each user needs to download a unified model from the central node for local training, in consideration of different capabilities of user equipments participating in training (where a capability difference may refer to a computing power fluctuation of a same user equipment at different moments that is caused by a power change or running of another allowed program), a computing power may be understood as a computing capability or a computing speed of a terminal device, and an indicator that can measure the computing power of the terminal device is floating point operations per second (floating point operations per second, FLOPS). In the federated learning architecture, a child node (that is, a user participating in a specific round of federated learning) needs to undertake a responsibility of training a network. However, usually, different models have different complexity. Therefore, a common indicator for measuring model complexity is floating point operations (floating point operations, FLOPs). Specifically, different model complexity may be reflected in the following: different network types, such as a convolutional network CNN, a fully connected network FC, and a recurrent neural network RNN; a same network type with different network depths/layers, such as a multi-layer CNN or FC; and different quantities of neurons, such as a quantity of neurons at a hidden layer in the FC network. It can be learned that different terminal devices have different capabilities of training a same model due to different computing powers, and a same terminal device requires different computing powers to train different models. The following three cases may occur.

Case 1: All users participating in training enable, through capability reporting, a central node to learn of information about computing powers (training capabilities, memories, and the like) of the users, and the central node delivers a model that can be trained by all the users, as shown in FIG. 4-b. In this case, complexity of training the model is limited by a user with a low computing power. The central node adjusts the global model based on the computing powers reported by all the users, so that a user 1 with a low computing power in this case can also train the model. However, performance of the global model may be limited by a user with a lowest computing power.

Case 2: A unified model is downloaded, but a part of users cannot train the model and finally use the global model, and consequently a loss may occur, as shown in FIG. 5. After a user 1 downloads $M_0$, the user 1 cannot train the global model due to a limited computing power. As a result, a feature of local data of the user 1 cannot be learned by the global model, and finally, performance of predicting a beam of the user 1 by using the global model may deteriorate.

Case 3: A central node performs differentiated model updates on different user terminals. Specifically, a base station broadcasts a plurality of global models (where grouping is performed based on computing powers reported by child nodes), or optionally, broadcasts both the plurality of global models and one classification neural network. The child node determines, based on a preset condition, a group, of a global model or in the classification neural network, to which the child node belongs, updates a local model corresponding to the group, reports a parameter, and reports an index of an updated model of the child node. The base station determines, based on the index, the global model corresponding to the parameter reported by the child node, and updates the global model. Then, the base station broadcasts the plurality of global models again in a 2nd round of federated learning. This is equivalent to implementing a plurality of (parallel) federated learning architectures. The central node is responsible for managing a plurality of global models in a unified manner, and each model corresponds to a group of computing power users. Although a problem that a unified model cannot be trained due to a computing power difference between user equipments can be resolved, there are the following disadvantages: A plurality of models need to be exchanged (broadcast) over air interfaces, and consequently air interface overheads are increased. An amount of data for training a single model is reduced, a total amount of data for training a single model is reduced because the plurality of models are delivered in groups, and model performance is difficult to be ensured.

In conclusion, model training efficiency in the existing federated learning framework is low.

To resolve the foregoing technical problem, embodiments of this application provide a model training method. The following describes the method provided in embodiments of this application with reference to the accompanying drawings in this specification.

Embodiments of this application provide a method for supporting, in a federated learning architecture, a central node in designing and delivering differentiated AI/ML network parameter update or freezing signaling based on a computing power status reported by each child node, to indicate the child node to train all or a part of a unified downloaded model. A child node computing power feedback procedure and a procedure in which the central node performs differentiated AI/ML network parameter updating or freezing for indication are added to original federated learning.

A specific differentiated network parameter update or freezing principle is shown in FIG. 6. Herein, a diagram of update/freezing indication based on an AI/ML network layer is shown. All users (child nodes) participating in federated learning download an AI/ML network shown in FIG. 6. The network is an AI/ML model with four network layers. In conventional federated learning, each child node needs to train the complete four network layers (all network parameters) by using local data, to obtain a model; and feed back the model to a central node. However, in embodiments of this application, based on different computing powers, the central node indicates a user with an insufficient computing power to update a part of parameters in the network, and a user with a sufficient computing power still updates all the parameters. As shown on the right side of FIG. 6, a user A updates only parameters of network layers corresponding to neurons in columns 1, 4, and 6, a user B updates parameters of network layers corresponding to neurons in columns 1, 2, 4, and 6, and a user C updates parameters of network layers corresponding to neurons in all columns 1, 2, 3, 4, 5, and 6. The central node is responsible for sending a differentiated update instruction to each corresponding child node. In addition to being indicated based on a network layer, the parameter update may also be indicated based on a neuron. The instruction may indicate a network layer for which the child node needs to perform freezing, or may indicate a network layer for which the child node needs to perform an update.

Each child node user uses local data as a training set to train the model with reference to the foregoing update/freezing indication. After training is completed, a gradient/weight value/network (or only a part that is responsible for updating) is uploaded to the central node (after encryption). The central node fuses gradients/weight values/networks uploaded by a plurality of child nodes. For example, if a FedAvg algorithm is still used for fusion, a parameter update indication that is based on a network layer is used, and users A, B, and C correspond to models 1, 2, and 3, a network layer g is a freeze layer for the user A, and is an update layer for the user B and the user C. During model fusion, when updating a parameter of the network layer g, the central node does not consider a parameter fed back by the user A. That is, a fusion process may be expressed by using the following mathematical formula:

$$M_{0,g} = \frac{1}{2}(\beta_{1,g}M_{1,g} + \beta_{2,g}M_{2,g} + \beta_{3,g}M_{3,g}).$$

$M_{0,g}$ represents a fused model parameter; $M_{1,g}$, $M_{2,g}$, and $M_{3,g}$ represent $g^{th}$ network layers of the models of the users; $\beta_{k,g} \in \{0, 1\}$ reflects an update instruction corresponding to a $g^{th}$ network layer of a model of a $k^{th}$ child node, to be specific, $\beta_{k,g} = 1$ indicates that a parameter of the $g^{th}$ network layer of the model is updated, and $\beta_{k,g} = 0$ indicates that the parameter of the $g^{th}$ network layer of the model is frozen; and $\frac{1}{2}$ is used because only two users are responsible for updating the parameter of the network layer. After fusion is completed, the central node issues an update again.

The communication method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

The communication method provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communication (massive machine type communication, mMTC), device to device (device to device, D2D), vehicle to everything (vehicle to everything, V2X), vehicle to vehicle (vehicle to vehicle, V2V), and internet of things (internet of things, IoT).

The following describes the communication method provided in embodiments of this application by using a communication system shown in FIG. 7 as an example.

FIG. 7 is a diagram of a communication system according to an embodiment of this application. As shown in FIG. 7, the communication system may include a network device and a plurality of terminals. The network device corresponds to a central node in a federated learning architecture, and the terminal corresponds to a child node in the federated learning architecture. The network device delivers a global model to each terminal participating in federated learning. Each user uses local data to train the global model to obtain a local model; and sends parameter information of the local model, such as a gradient and a weight value (after encryption), to the network device. The network device performs model fusion (model aggregation, MA) to update the global model, and then sends an updated global model to each user. The user continues to update the local model, outputs parameter information of an updated local model, and sends the parameter information to the network device. In this way, iteration is performed for a plurality of times until the model is converged.

It should be noted that FIG. 7 is merely an example framework diagram, and a quantity of network devices and a quantity of terminals included in FIG. 7 are not limited. In addition to functional nodes shown in FIG. 7, other nodes such as a core network device, a gateway device, and an application server may be further included. This is not limited. The network device and the core network device communicate with each other in a wired or wireless manner, for example, through a next generation (next generation, NG) interface.

The terminal device in embodiments of this application may also be referred to as a terminal, and may be a device with a wireless transceiver function. The terminal may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The terminal device may be a user equipment. The terminal device includes a handheld device, a vehicle-mounted device, a wearable device, or a computing device having a wireless communication function. For example, the terminal device may be a mobile phone, a tablet computer, or a computer with the wireless transceiver function. The terminal device may alternatively be a virtual reality (Virtual Reality, VR) terminal device, an augmented reality (Augmented Reality, AR) terminal device, a wireless terminal in industrial control, a wireless terminal in self driving, a wireless terminal in telemedicine, a wireless terminal in a smart grid, a wireless terminal in a smart city, a wireless terminal in a smart home, and/or the like.

In embodiments of this application, an apparatus configured to implement a function of the terminal device may be a terminal device, or may be an apparatus, for example, a chip system, that can support the terminal device in implementing the function. The apparatus may be mounted in the terminal device or used together with the terminal device. In embodiments of this application, the chip system may include a chip, or may include a chip and another discrete component. In the following embodiments, technical solutions provided in embodiments of this application are described by using an example in which the apparatus configured to implement the function of the terminal device is a terminal device, and the terminal device is a UE.

The network device in embodiments of this application includes a base station (Base Station, BS), and may be a device that is deployed in a radio access network (radio access network, RAN) and that can communicate with a terminal device. Optionally, the radio access network may also be referred to as an access network for short. The network device may also be referred to as an access network device. The base station may be in a plurality of forms, for example, a macro base station, a micro base station, a relay station, or an access point. The base station in embodiments of this application may be a base station in a 5G system, a base station in a long term evolution (Long Term Evolution, LTE) system, or a base station in another system. This is not limited. The base station in the 5G system may also be referred to as a transmission reception point (Transmission Reception Point, TRP) or a next generation NodeB (Next Generation NodeB, gNB). The base station in embodiments of this application may be an integrated base station, or may be a base station including a central unit (Central Unit, CU) and a distributed unit (Distributed Unit, DU). The base station including the CU and the DU may also be referred to as a base station in which a CU and a DU are separated. For example, the base station includes a gNB-CU and a gNB-DU. The CU may be further separated into a CU control plane (CU Control Plane, CU-CP) and a CU user plane (CU User Plane, CU-UP). For example, the base station includes a gNB-CU-CP, a gNB-CU-UP, and the gNB-DU.

In embodiments of this application, an apparatus configured to implement a function of the network device may be a network device, or may be an apparatus, for example, a chip system, that can support the network device in implementing the function. The apparatus may be mounted in the network device or used together with the network device. In the following embodiments, the technical solutions provided in embodiments of this application are described by using an example in which the apparatus configured to implement the function of the network device is a network device, and the network device is a base station.

To support a machine learning function in a wireless network, a dedicated AI network element or module may be further introduced in the network. If the AI network element is introduced, the AI network element corresponds to an independent network element. If the AI module is introduced, the AI module may be located inside a specific network element, and the corresponding network element may be a terminal device, a network device, or the like.

In the technical solutions provided in embodiments of this application, the following describes the method provided in embodiments of this application with reference to a beam selection scenario by using an example in which the apparatus configured to implement the function of the network device is a base station and the apparatus configured to implement the function of the terminal device is a terminal.

FIG. 8 is a schematic flowchart of a model training method according to an embodiment of this application. As shown in FIG. 8, the method may include the following steps.

S801: A plurality of child node devices send capability information to a central node device, and correspondingly, the central node device receives the capability information from the plurality of child node devices.

The capability information of the plurality of child node devices represents capabilities of training a model by the plurality of child node devices, and the plurality of child node devices are a plurality of child node devices that participate in federated learning of the model.

The plurality of child node devices are in communication connection to the central node device. In this embodiment of this application, that the child node device sends information to the central node device is referred to as reporting, and that the central node device sends information to the child node device is referred to as delivering. The central node configures, for the child node, a downlink resource used by the central node to deliver first indication information and the model. For example, in a beam selection scenario, the downlink resource may be a control channel resource, for example, a physical downlink control channel (Physical downlink control channel, PDCCH) resource; or may be a data channel resource, for example, a physical downlink shared channel (Physical downlink shared channel, PDSCH) resource. Specifically, the downlink resource includes parameters such as a frequency domain resource block number and a start location, a subband number, a subband bandwidth, a frequency hopping parameter, and a modulation and coding scheme (Modulation and coding scheme, MCS).

The model may be delivered by the central node in a broadcast or multicast mode. Examples are shown as follows: In a single-cell federated learning architecture in which a central node is a base station and child nodes are UEs, a model may be delivered in the broadcast mode. Due to a characteristic of broadcasting, a child node that does not participate in federated learning may also receive broadcast information. In a multi-cell federated learning architecture in which a base station having a federated learning management function is used as a central node and other base stations are used as child nodes, the central node may also deliver a model to each child node base station in the broadcast mode. Similarly, another child node that does not participate in federated learning may also receive broadcast information. Alternatively, the multicast mode may be used for child nodes participating in federated learning, and child nodes associated with a same central node are classified into a group, have a same group number, and are configured with a same downlink resource. In the multicast mode, a child node that does not participate in federated learning does not receive multicast information.

The central node may further configure, for the child node, an uplink resource used by the child node to report an updated first model parameter. Alternatively, another federated learning management node may configure, for the central node and the child node, an uplink resource used by the child node to report an updated first model parameter and necessary signaling. Similar to downlink resource configuration, the uplink resource may be a control channel resource, for example, a physical uplink control channel (Physical uplink control channel, PUCCH) resource; or may be a data channel resource, for example, a physical uplink shared channel (Physical uplink shared channel, PUSCH) resource.

In this embodiment of this application, the child node needs to send capability information to the central node device on an access network. The capability information needs to include at least a size of memory space that can be used by the child node device to store an AI/ML model, computing power information (a computing capability of running the AI/ML model, for example, FLOPS computing performance and a power status mentioned above, where a current power is also one of factors that affect a computing capability of a terminal device) of the child node, and collected information (which can help the central node predict a duration required for model training) related to a local data volume. Other optional capability information may include: whether the child node device supports running of the AI/ML model, and a supported AI/ML model type (for example, a CNN, an RNN, a fully connected model, or a random forest model). The central node allows a child node to participate in federated learning and sends the model to the child node only when the child node supports an AI/ML model. Other optional capability information may include: hardware information of the child node, for example, an antenna configuration (a quantity of antennas, a polarization direction, and the like), a quantity of radio frequency channels, a sensor type (a location sensor/GPS, a motion sensor, or the like), and a parameter of the child node. Because the model is trained in a federated learning framework, and the child node performs training by using local data of the child node, the child node may not need to report information related to actually collected beam information or information related to privacy.

S802: The central node device sends first indication information and the model to each of the plurality of child node devices, and correspondingly, the plurality of child node devices receive first indication information and the model from the central node device.

The first indication information indicates first model parameters to be updated when the plurality of child node devices train the model, and the to-be-updated first model parameters of the plurality of child node devices are determined based on the capability information of the plurality of child node devices.

Sending of the model includes sending of a structure of the model and a parameter of the model. The structure of the model is described by, for example, a quantity of convolution layers in a convolutional neural network (Convolutional Neural Network, CNN), a quantity of channels and a size of a convolution kernel at each convolution layer, a quantity of fully connected layers and a quantity of neurons, a quantity of layers (layers) in a recursive neural network (Recurrent Neural Network, RNN), and a calculation manner of each state in each layer of structure.

The first indication information may be delivered in a signaling manner. Specifically, the following three manners may be selected: 1. First indication information is sent to a specified child node in a unicast mode. 2. If different child nodes correspond to same first indication information, the same first indication information may be sent to a group of child nodes in the multicast mode. 3. The first indication information is delivered in the broadcast mode. Each piece of signaling includes a child node index (index) corresponding to the signaling. After receiving a broadcast signal, each child node uses signaling corresponding to an index of the child node.

In addition, the central node may further deliver information related to model training and reporting of the child node, for example, information such as a quantity of iterations required by the child node in each round, a learning rate, a loss function, a batch size, and a type of a reported parameter (a model parameter or a gradient). To reduce air interface overheads for delivering the model, the model may be compressed before being delivered. A model compression method includes but is not limited to model pruning, model distillation, model quantization, and the like.

S803: The plurality of child node devices train the model based on training sets and the to-be-updated model parameters, to obtain updated first model parameters.

The training sets include beam information collected by the plurality of child node devices. In a beam management scenario, in federated learning, a child node may be a base station or may be a user terminal device, and a central node may be an independent federated learning management node or a base station that functions as a central node. It is assumed that a to-be-trained global model is an AI/ML model that uses an estimated channel measurement value or a received signal as an input and uses an optimal beam index (ID) as an output. In this case, the child node is responsible for collecting a training set as a model input in a data collection phase. The training set may include a channel measurement value or a received signal and a label (namely, an optimal beam ID) used for training the model. The label may be understood as follows: The base station sends all possible beams (codebook-based SSB or CSI-RS beams) to a UE one by one, and the UE selects a beam with optimal performance and uses an index of the beam as a label (where the beam with the optimal performance may be a beam with a largest L1-RSRP or SNR measurement value in the SSB/CSI-RS beams).

During training of the model, if the child node device has a freeze parameter, gradient-free (required_grad=False) processing may be performed on the freeze parameter in a corresponding AI/ML network optimizer, to prevent the freeze parameter from participating in training.

A loss function used for training is related to an application scenario and a type of the used model. For example, in this embodiment of this application, a cross-entropy (Cross-Entropy, CE) function may be used in a corresponding beam management classification problem (for predicting an optimal beam ID); a binary cross-entropy (Binary Cross-Entropy, BCE) function may be used in a receiver performance/data demodulation performance problem; and a mean squared error (Mean Squared Error, MSE) function or a mean absolute error (Mean Absolute Error, MAE) function may be used in a regression problem such as channel estimation. The child node may select the loss function based on the application scenario, or may select the loss function according to an indication delivered by the central node. Specifically, the child node may use the received global model as an initial model of this round for training. The loss function is mainly related to a local dataset. For example, an MSE loss function of a $k$ th child node is

$$LOSS = \frac{1}{n_k}\sum_{l=1}^{l=n_k}\left(y_{k,l} - \bar{y}_{k,l}\right)^2$$

, where $n_k$ is a quantity of samples, $y_{k,l}$ is an output of an $l$ th sample, and $\bar{y}_{k,l}$ is a label of the $l$ th sample.

S804: The plurality of child node devices send the updated first model parameters to the central node device, and correspondingly, the central node device receives the updated first model parameters from the plurality of child node devices.

The child node reports the updated first model parameter by using the uplink resource described in step S801. Each child node may report all parameters of a beam-trained model, or may report only a first model parameter that participates in updating. For a case in which all the parameters of the beam-trained model are reported, for example, it is assumed that a local model has a total of $G$ parameters, and the $k$th child node reports $M_k = [m_{k,1}, m_{k,2}, ... , m_{k,G}]$, where $m_{k,g}$ represents a $g$th parameter of the $k$th child node. All the parameters may be combined and sent as a vector. Alternatively, a set of differences between the current model parameters and model parameters of a previous round is reported, that is, gradients $\Delta M_k = [\Delta m_{k,1}, \Delta m_{k,2}, ... , \Delta m_{k,G}]$ of the parameters are reported. A sequence of reporting the updated first model parameters is consistent with a sequence of delivering the first model parameters. This reporting manner can adapt to both parameter reporting at a granularity of a network layer or parameter reporting at a granularity of a single parameter, and it is unnecessary to set different reporting manners for the two parameter modes.

In consideration of saving air interface overheads, when only the first model parameter that participates in updating is reported, the child node reports the first model parameter of the child node in the local model by using the uplink resource configured in S801. For example, it is assumed that the model has a total of $G$

parameters, and *G'* parameters are first model parameters of the $k^{th}$ child node. In this case, the $k^{th}$ child node reports a local model $M_k = [m_{k,1}, m_{k,2}, ... , m_{k,G}]$, where $m_{k,g}$ represents a $g^{th}$ parameter of the $k^{th}$ child node. All parameters may be combined and sent as a vector (or a set of differences between the current model parameters and model parameters of a previous round is reported, that is, gradients $\Delta M_k = [\Delta m_{k,1}, \Delta m_{k,2}, ... , \Delta m_{k,G}]$ of the parameters are reported).

In addition, the child node may further report auxiliary information, such as a quantity $n_k$ of samples of a local dataset of the child node and model type indication information.

S805: The central node device fuses global model parameters of the plurality of child node devices by using a preset fusion algorithm, to obtain a fused parameter.

The global model parameters include the updated first model parameters and second model parameters other than the first model parameters in the model. The preset fusion algorithm can be used to fuse the global model parameters of the plurality of child node devices to obtain the fused parameter. For example, the preset fusion algorithm may be selected to obtain an average value, a median, a mode, or the like.

S806: The central node device sends the fused parameter to the plurality of child node devices, and correspondingly, the plurality of child node devices receive the fused parameter.

S807: The plurality of child node devices train the model based on the fused parameter.

The plurality of child node devices train the model based on the fused parameter until the model trained based on the fused parameter is converged. Otherwise, S802 to S807 are performed after S802 is returned to for adjusting the first indication information, until the model trained based on the fused parameter is converged. Whether the model is converged may be determined by using a loss function. With reference to corresponding descriptions in S803, the loss function may be a cross-entropy (Cross-Entropy, CE) function.

In this embodiment of this application, the plurality of child node devices first send the capability information to the central node device, and then the central node device sends the first indication information and the model to each of the plurality of child node devices based on the capability information. Then, the plurality of child node devices train the model based on the training sets and the to-be-updated model parameters, to obtain the updated first model parameters. In addition, the central node device fuses, by using the preset fusion algorithm, the global model parameters that include the first model parameters and that are of the plurality of child node devices, to obtain the fused parameter; and then the plurality of child node devices train the model based on the fused parameter. In this way, when the child node device trains the model, a part of parameters are frozen and do not participate in training. Therefore, during model training, a model training progress is not affected by a central node device with a low computing power, and model training efficiency is high.

In an embodiment, the method further includes the following steps.

S808: The central node device separately predicts model training durations of the plurality of child node devices based on the capability information.

The central node device needs to separately predict the model training durations of the plurality of child node devices based on the capability information, to determine whether the child node devices can train the model. A concept of a time window may be used, to be specific, it is required that a child node k can complete training of the model within a given time window range (where a time window may be a time window with a length $T_0$ from a moment t after the model is broadcast to a moment $t+T_0$, where $t \geq 0$) in which the child node needs to feed back a parameter/gradient of a local model. It is assumed that time $T_k$ used by the child node device k to train the model may be expressed as follows:

$$T_k = \frac{f(\alpha_k) \times \text{FLOPS}}{\text{FLOPs}_k}.$$

$\alpha_k$ includes all hyperparameters (which may be preconfigured by the central node in a 1st round of training, and may be provided by the child node after the 1st round) that may affect a training duration. $y=f()$ means that the hyperparameters are mapped, which is equivalent to training y models. FLOPS represents complexity of the model and is determined by a model type of the model. $\text{FLOPs}_k$ represents computing power performance (determined based on capability information) of the child node device k. The model training durations of the plurality of child node devices can be predicted by using the foregoing formula.

S809: The central node device determines the first model parameters of the child node devices based on the model training durations.

With reference to the formula in the descriptions of S808, after a model training duration of a child node device is predicted, a first model parameter of the child node device may be determined based on the model training duration. When $T_k \geq T_0$ (where $k = 0, ..., K$) exists, to be specific, the predicted model training duration of the child node device k exceeds the preset time window range $T_0$, it indicates that the child node device k cannot train the model, or it indicates that the child node device k can train the model but the training duration exceeds the time window range $T_0$.

To enable all the child nodes to train the model and complete training tasks in a given time window, in this embodiment of this application, for a child node device with an insufficient capability, model training is performed according to a policy of training a part of model parameters instead of all model parameters. Correspondingly, the central node needs to determine the first model parameter of the child node device based on the reported model training duration, that is, a model parameter participating in training, which is referred to as an update parameter, and a remaining model parameter that does not participate in training is referred to as a freeze parameter.

For example, if the first model parameters are selected at the granularity of a single parameter, it is assumed that the model $M_0$ has a total of G parameters, and $M_{0,g}$ represents a $g^{th}$ parameter. In this case, a set of all parameters corresponding to a model of the $k^{th}$ child node may be represented as $\varphi M_k = \{M_{1,1}, M_{1,2}, M_{1,3}, \dots, M_{1,G}\}$, where $M_{1,g}$ represents a $g^{th}$ parameter in the parameter set. A possible set indicating whether parameters participate in training may be expressed as follows:

$$\beta = \left\{\beta_1{}^T, \beta_2{}^T, \dots, \beta_K{}^T\right\}.$$

Any element $\beta_k$ is a vector with one row and G columns, and elements included in the vector are $\{\beta_{k,1}, \beta_{k,2}, \dots, \beta_{k,G}\}$. Any element $\beta_{k,g} = \{0, 1\}$ indicates whether the $g^{th}$ parameter of the model corresponding to the $k^{th}$ child node needs to be updated/frozen. It is assumed herein that $\beta_{k,g} = 0$ indicates that the parameter is a freeze parameter for the child node, and $\beta_{k,g} = 1$ indicates that the parameter is an update parameter for the child node. $()^T$ represents a transposition operation. Similarly, if freezing/updating is performed based on each network layer, the foregoing index g represents all parameters of a $g^{th}$ network layer of the model, and $\beta_{k,g} = \{0, 1\}$ indicates whether all parameters of a $g^{th}$ network layer of the model corresponding to the $k^{th}$ child node need to be updated/-frozen.

Specifically, how to classify parameters into a freeze parameter and an update parameter is described herein by using a layer-based freeze/update model as an example. First, freezing more variables can save more computing power, but a cost is deterioration of model performance. In addition, if update layers are unevenly allocated to all the child nodes participating in federated learning, model performance is also affected. A possible classification rule is as follows: A quantity of layers for which freezing needs to be performed is gradually increased in ascending order based on a capability reported by a terminal, until a memory limit of the terminal is met and local model training and uploading can be completed within a specified time window. In addition, a quantity of terminals participating in one round of federated learning is increased as much as possible, to increase terminal differentiation and reduce a probability of uneven update layer allocation among child nodes. Designing the rule is mainly implemented in the base station. A better optimization/rule design algorithm can effectively improve the model performance.

In this embodiment of this application, the model training durations of the plurality of child node devices are first separately predicted based on the capability information, and then the first model parameters of the child node devices are determined based on the model training durations, so that the determined to-be-trained first model parameters can match the corresponding child node devices, and the model training progress is ensured.

In an embodiment, S808, to be specific, the central node device separately predicts the model training durations of the plurality of child node devices based on the capability information may include the following steps.

S8081: When the model training durations do not meet a preset duration condition, select a part of parameters of the model as the first model parameters.

S8082: When the model training durations meet a preset duration condition, select all parameters of the model as the first model parameters.

In this embodiment of this application, based on different comparison results between the model training duration and the preset duration condition, two policies are correspondingly used: selecting the part of parameters of the model as the first model parameters, and selecting all the parameters of the model as the first model parameters, so that model performance is ensured while the model training progress is ensured.

In an embodiment, S8081, to be specific, selecting the part of parameters of the model as the first model parameters may include:

randomly selecting the part of parameters of the model as the first model parameters.

The randomly selecting the part of parameters of the model as the first model parameters corresponds to parameter selection at the singularity of a single parameter. For details, refer to the descriptions of selecting the first model parameter at the granularity of a single parameter in S809. Details are not described again.

In this embodiment of this application, the part of parameters of the model are randomly selected as the first model parameters, so that the determined to-be-trained first model parameter can match a corresponding child node device, and the model training progress is ensured.

In an embodiment, the model includes a first network layer and a second network layer, a model training scenario indicates the first network layer, and the first network layer and the second network layer are different. S8081 of selecting the part of parameters of the model as the first model parameters may include:

selecting parameters of the first network layer and a part of parameters of the second network layer as the first model parameters.

In this embodiment of this application, selecting the first model parameter based on network layers corresponds to parameter selection at the granularity of a network layer. For example, the first network layer is a fully connected layer. For a network having a plurality of fully connected layers, if each child node user updates parameters corresponding to a part of neurons at each layer in a distributed manner, it may be difficult to ensure final training effect of the network. Therefore, in this embodiment of this application, all parameters of a specific first network layer are selected as the first model parameters, to ensure the model performance.

Considering that the first network layer may include a plurality of network layers, when selecting the parameter of the first network layer, the central node device may determine, based on capability information of a child node device, a first network layer corresponding to the child node device. When determining first network layers corresponding to the plurality of child node devices, a set of the first network layers corresponding to all the child node devices covers all the first network layers, to ensure model training precision.

In addition, the second network layer (for example, a non-fully connected layer or a fully connected layer that does not need to be updated and that is indicated by the child node device) may be selected in a random selection manner. Because a channel condition in a same cell is fixed, a fully connected layer that is trained by a part of users and that is responsible for a finer granularity may also be used in an implementation phase by another part of users with low computing powers, to reduce computing power overheads.

In addition, actually, a proportion of parameters occupied by some network layers may be far higher than that of other types of network layers. For example, as shown in FIG. 9, an AI/ML model is formed by connecting convolution layers (Conv1 and Conv2) that have a feature extraction function to fully connected layers (FC1 16 Neural and FC2 64 Neural) that have a classification function in series. In the model, parameters of the fully connected layers account for a high proportion of all parameters of the model. In addition, a same task may also have different classification granularities. For example, in an artificial intelligence-assisted (AI-assisted) beam management task, if a base station side initiates SSB wide beam sweeping that is based on a 16-codeword codebook, computing powers of some user equipments support prediction of an ID of an optimal beam in 16 wide beams, and computing powers of some other user equipments can support direct prediction of an ID of an optimal beam in 64 narrow beams. Therefore, at least two fully connected layers with different quantities of neurons (16 neurons and 64 neurons) are required for the two types of users to complete the task.

Correspondingly, in a parameter selection scenario at the granularity of a network layer, model parameters may be expressed as follows:

$$\beta^{nFC} = \{(\beta_1^{nFC})^T, (\beta_2^{nFC})^T, \dots, (\beta_K^{nFC})^T\};$$

and

$$\beta^{FC} = \{\beta_1^{FC^T}, \beta_2^{FC^T}, \dots, \beta_K^{nFC^T}\}.$$

$\beta^{nFC}$ represents a parameter set corresponding to neural network parameters of a layer before all fully connected layers, any element $\beta_k^{nFC} \in (Z^+)^G$ in the set represents a parameter set of a non-fully connected layer in the $k^{th}$ child node, $Z^+$ represents a positive integer, a dimension is G, and a value of G depends on whether parameter selection is performed corresponding to each network parameter or each network layer. $\beta^{FC}$ represents a set of neural network parameters of all the fully connected layers, any element $\beta_k^{FC} \in (Z^+)^L$ in the set represents a set of update/freeze information of a fully connected layer in the $k^{th}$ child node, a dimension is L, and a value of L corresponds to only a quantity of the fully connected layers. For a fully connected layer for which the child node k needs to perform updating, a possible matrix expression is as follows:

$$\beta_k^{FC} = [1 \quad 1 \quad 0].$$

It indicates that there are three fully connected layers in total, and the $k^{th}$ child node is responsible for updating all network parameters of the first two fully connected layers. Correspondingly, a first model parameter corresponding to the $k^{th}$ child node may be represented as follows:

$$\mathrm{Random}(\beta^{nFC}) + \beta_k^{FC}\beta^{FC}.$$

Random() represents a partial selection function.

With reference to FIG. 9, during loss function calculation, different child nodes use outputs of corresponding first network layers to calculate loss functions. The beam management task is still used as an example, and the fully connected layer corresponds to beam ID labels of three resolutions {16, 64, 128}. Assuming that the $k^{th}$ child node corresponds to a 64-beam prediction task, a loss function of the $k^{th}$ child node is to determine a cross-entropy (CE Loss) between a label and an output obtained after a softmax operation is performed on an output of a 64-neuron fully connected layer instead of determining a cross-entropy based on a final network output (a cross-entropy between the label and an output of a 128-neuron fully connected layer). Similarly, it is applied to child nodes corresponding to 16-beam and 128-beam prediction tasks.

In this embodiment of this application, the parameters of the first network layer and the part of parameters of the second network layer are specifically selected as the first model parameters, so that a requirement of a model application scenario on a network layer is considered, and model training performance is ensured.

In an embodiment, before selectingparameters of a preset fully connected layer in the fully connected layer are selected as the first model parameters, the method may further include the following step.

S810: The central node device determines, based on the model application scenario, the first network layer required for constructing the model.

Based on different model application scenarios, correspondingly, the model also needs to have specific network layers. For example, in a beam management task, it is assumed that in a high frequency millimeter wave downlink system, a central node device has 64 antennas, and different child node devices may complete a task of predicting an optimal beam in 16 wide beams based on a 16-DFT codebook, a prediction task of directly predicting an ID of an optimal beam in 64 narrow beams based on a 16-DFT wide beam codebook, and higher-precision beam ID prediction based on a steering vector without using a codebook (for example, preset prediction with 128 or higher precision without using an orthogonal codebook). In this case, a last fully connected layer in a delivered global model needs to be a fully connected layer having 16, 64, or 128/256 neurons, in other words, a model application scenario indicates the fully connected layer having 16, 64, or 128/256 neurons, and the fully connected layer having 16, 64, or 128/256 neurons is a first network layer required for constructing the model.

In this embodiment of this application, at least one fully connected layer required for constructing the model is determined as the preset fully connected layer corresponding to the child node device, so that the requirement of the model application scenario for a network layer is considered, and the model training performance is ensured.

In an embodiment, the capability information further represents types of models that can be trained by the child node devices, and the method further includes:

The central node device determines a child node device whose capability information includes the model type of the model as a target device to which the first indication information and the model are sent.

In this embodiment of this application, the child node device whose capability information includes the model type of the model is determined as the target device to which the first indication information and the model are sent, so that it is ensured that all child node devices that participate in training can train the model, and the model training progress is ensured.

In an embodiment, S805, to be specific, the central node device fuses the global model parameters of the plurality of child node devices by using the preset fusion algorithm, to obtain the fused parameter may include the following step:

S8051: For model parameters with a same function of different child node devices, the central node device sets weights of the second model parameters to a first preset weight value, sets weights of the first model parameters to a second preset weight value, and performs weighted averaging to obtain the fused parameter.

A function of the first preset weight value is to reduce effect of the second model parameter on the fused parameter as much as possible, and a function of the second preset weight value is to enable a parameter to which the weight value is assigned to affect the fused parameter. For example, the first preset weight value may be selected as 0, and the second preset weight value may be selected as 1. Correspondingly, a calculation process of a $g^{th}$ fused parameter may be expressed by using the following formula:

$$M_{0,g} = \frac{1}{U}\sum_{k=1}^{K}\beta_{k,g}M_{k,g}.$$

$U \in Z^+$, $U \leq K$, and U represents a quantity of first model parameters. With reference to the descriptions in S809, $\beta_{k,g} = 0$ indicates that the parameter is a freeze parameter for the child node, and $\beta_{k,g} = 1$ indicates that the parameter is an update parameter for the child node. Functions of both the first preset weight value and the second preset weight value are implemented by $\beta_{k,g}$.

In this embodiment of this application, it is designed that the second model parameter cannot affect the preset fusion algorithm of the fused parameter, and cannot participate in calculation of the fused parameter, so that the second model parameter that is not updated cannot affect model training, and the model training performance is ensured.

In an embodiment, S805, to be specific, the central node device fuses the global model parameters of the plurality of child node devices by using the preset fusion algorithm, to obtain the fused parameter may alternatively include the following step:

S8052: For model parameters with a same function of different child node devices, the central node device sets both weights of the second model parameters and weights of the first model parameters to a second preset weight value, and performs weighted averaging to obtain the fused parameter.

With reference to the descriptions of the second preset weight value in S8051, in this embodiment of this application, the weight of the first model parameter and the weight of the second model parameter are both set to the second preset weight value, so that both the first model parameter and the second model parameter affect the fused parameter. For example, the second preset weight value may be set to 1. Correspondingly, a calculation process of a $g^{th}$ fused parameter may be expressed by using the following formula:

$$M_{0,g} = \frac{1}{K}\sum_{k=1}^{K}M_{k,g}.$$

The foregoing describes the model training method provided in this embodiment of this application from a perspective of exchanging a model parameter between the central node device and the child node device. If the central node device and the child node device exchange a model gradient, the fused parameter may be calculated by adding the model gradient to a model parameter of a previous round, which may be represented by using the following formulas:

$$M_{0,g}^t = M_{0,g}^{t-1} + \Delta M_{0,g};$$

and

$$\Delta M_{0,g} = \frac{1}{U} \sum_{k=1}^{K} \beta_{k,g} \Delta M_{k,g}.$$

$\Delta M_{0,g}$ represents a fused model gradient, and corresponds to the fused parameter; and $\Delta M_{k,g}$ represents a model gradient, and corresponds to the model parameter. The fused parameter can still be calculated by using the foregoing formulas, to implement model training.

In this embodiment of this application, it is further designed that the second model parameter can affect the preset fusion algorithm of the fused parameter, and can participate in calculation of the fused parameter, so that the determined fused parameter can participate in model training, and the model training progress is ensured.

The foregoing describes the model training method provided in embodiments of this application from a perspective of model training. After a model is obtained through training according to the foregoing method, the trained model may be used for beam selection. The following describes a beam information selection method provided in embodiments of this application from a perspective of model application. The method may be performed by a child node device. As shown in FIG. 10, the method may include the following steps.

S101: Receive beam information.

The child node device can receive the beam information from a network device.

S102: Input the beam information into a model, and output target beam information.

The model is obtained through training according to the model training method described in the foregoing embodiment.

In this embodiment of this application, a target beam is selected by using the model, and training efficiency of the model is high, so that efficiency of selecting the target beam is high.

The foregoing mainly describes the solutions provided in embodiments of this application from a perspective of interaction between nodes. It may be understood that to implement the foregoing functions, the nodes, such as the child node device and the central node device, include hardware structures and/or software modules corresponding to the functions. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the child node device and the central node device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

During specific implementation, network elements shown in this application, such as the child node device and the central node device, may use a composition structure shown in FIG. 11 or include components shown in FIG. 11. FIG. 11 is a diagram of a structure of a communication apparatus 1100 according to an embodiment of this application. When the communication apparatus 1100 has a function of the child node device described in embodiments of this application, the communication apparatus 1100 may be a chip or a system on chip in the child node device. When the communication apparatus 1100 has a function of the central node device described in embodiments of this application, the communication apparatus 1100 may be a chip or a system on chip in the central node device.

As shown in FIG. 11, the communication apparatus 1100 may include a processor 1101, a communication line 1102, and a transceiver 1103. The processor 1101, a memory 1104, and the transceiver 1103 may be connected through the communication line 1102. In an example, the processor 1101 may include one or more CPUs, for example, a CPU 0 and a CPU 1 in FIG. 11.

In an optional implementation, the communication apparatus 1100 includes a plurality of processors. For example, in addition to the processor 1101 in FIG. 11, the communication apparatus 1100 may further include a processor 1107.

The processor 1101 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another apparatus having a processing function, for example, a circuit, a component, or a software module.

The communication line 1102 is configured to transmit information between the components included in the communication apparatus 1100.

The transceiver 1103 is configured to communicate with another device or another communication network. The another communication network may be an Ethernet, a radio access network (radio access network, RAN), a wireless local area network (wireless local area network, WLAN), or the like. The transceiver 1103 may be an interface circuit, a pin, a radio frequency module, a transceiver, or any apparatus that can implement communication.

Further, the communication apparatus 1100 may include the memory 1104. The memory 1104 is configured to store instructions. The instructions may be a computer program.

The memory 1104 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD_ROM) or another optical disk storage, an optical disc storage, a magnetic disk storage medium or another magnetic storage device. The optical disc storage includes a compressed optical disc, a laser disc, an optical disc, a digital versatile disc, a Blu-ray disc, or the like.

It should be noted that the memory 1104 may exist independently of the processor 1101, or may be integrated with the processor 1101. The memory 1104 may be configured to store instructions, program code, some data, or the like. The memory 1104 may be located inside the communication apparatus 1100, or may be located outside the communication apparatus 1100. This is not limited. When executing the instructions stored in the memory 1104, the processor 1101 may implement the method provided in embodiments of this application.

In an optional implementation, the communication apparatus 1100 further includes an output device 1105 and an input device 1106. For example, the input device 1106 is a keyboard, a mouse, a microphone, a joystick, or another device; and the output device 1105 is a display, a speaker (speaker), or another device.

It should be noted that the communication apparatus 1100 may be a desktop computer, a portable computer, a network server, a mobile phone, a tablet computer, a wireless terminal, an embedded device, a chip system, or a device having a structure similar to that in FIG. 11. In addition, the composition structure shown in FIG. 11 does not constitute a limitation on the communication apparatus. In addition to the components shown in FIG. 11, the communication apparatus may include more or fewer components than those shown in the figure, or some components may be combined, or different component arrangements may be used.

In this embodiment of this application, the chip system may include a chip, or may include a chip and another discrete component.

FIG. 12 is a diagram of a structure of a communication apparatus 120. The communication apparatus is used in a central node device. Modules in the apparatus shown in FIG. 12 have functions of implementing corresponding steps in FIG. 8, and can achieve corresponding technical effect. For beneficial effect corresponding to steps performed by the modules, refer to the descriptions of the corresponding steps in FIG. 8. Details are not described again. The functions may be implemented by hardware, or may be implemented by hardware by executing corresponding software. The hardware or the software includes one or more modules corresponding to the functions. The communication apparatus may be a chip or a system on chip in the central node device. For example, the communication apparatus includes:

a receiving module 121, configured to receive, from a plurality of child node devices (child node devices that participate in federated learning of a model), capability information representing capabilities of training the model by the child node devices; a sending module 122, configured to send, to each of the plurality of child node devices, the model and first indication information indicating a first model parameter to be updated when the child node device trains the model, where the to-be-updated first model parameter of the child node device is determined based on capability information of the child node device, where the receiving module 121 is further configured to receive updated first model parameters from the plurality of child node devices; and a processing module 123, configured to fuse global model parameters of the plurality of child node devices by using a preset fusion algorithm, to obtain a fused parameter, where the global model parameters include the updated first model parameters and second model parameters other than the first model parameters in the model, where the sending module 122 is configured to send the fused parameter to the plurality of child node devices.

In a possible implementation, the processing module 123 is specifically configured to:
separately predict model training durations of the plurality of child node devices based on the capability information; and determine the first model parameters of the child node devices based on the model training durations.

In a possible implementation, the processing module 123 is specifically configured to:
when the model training durations do not meet a preset duration condition, select a part of parameters of the model as the first model parameters; or when the model training durations meet a preset duration condition, select all parameters of the model as the first model parameters.

In a possible implementation, the processing module 123 is specifically configured to:

randomly select the part of parameters of the model as the first model parameters.

In a possible implementation, the model includes a first network layer and a second network layer, a model application scenario indicates the first network layer, and the first network layer and the second network layer are different; and the processing module 123 is specifically configured to select parameters of the first network layer and a part of parameters of the second network layer as the first model parameters.

In a possible implementation, the processing module 123 is further configured to:

before selecting parameters of a preset fully connected layer in a fully connected layer as the first model parameters, determine, based on the model application scenario, the first network layer required for constructing the model.

In a possible implementation, the capability information further represents types of models that can be trained by the child node devices, and the processing module 123 is further configured to:

determine a child node device whose capability information includes a model type of the model as a target device to which the first indication information and the model are sent.

In a possible implementation, the processing module 123 is specifically configured to:

for model parameters with a same function of different child node devices, set weights of the second model parameters to a first preset weight value, set weights of the first model parameters to a second preset weight value, and perform weighted averaging to obtain the fused parameter; or for model parameters with a same function of different child node devices, set both weights of the second model parameters and weights of the first model parameters to a second preset weight value, and perform weighted averaging to obtain the fused parameter.

In this embodiment of this application, the plurality of child node devices first send the capability information to the central node device, and then the central node device sends the first indication information and the model to each of the plurality of child node devices based on the capability information. Then, the plurality of child node devices train the model based on training sets and to-be-updated model parameters, to obtain the updated first model parameters. In addition, the central node device fuses, by using the preset fusion algorithm, the global model parameters that include the first model parameters and that are of the plurality of child node devices, to obtain the fused parameter; and then the plurality of child node devices train the model based on the fused parameter. In this way, when the child node device trains the model, a part of parameters are frozen and do not participate in training. Therefore, during model training, a model training progress is not affected by a central node device with a low computing power, and model training efficiency is high.

Further, the model training durations of the plurality of child node devices are first separately predicted based on the capability information, and then the first model parameters of the child node devices are determined based on the model training durations, so that the determined to-be-trained first model parameters can match the corresponding child node devices, and the model training progress is ensured.

Further, based on different comparison results between the model training duration and the preset duration condition, two policies are correspondingly used: selecting the part of parameters of the model as the first model parameters, and selecting all the parameters of the model as the first model parameters, so that model performance is ensured while the model training progress is ensured.

Further, the part of parameters of the model are randomly selected as the first model parameters, so that the determined to-be-trained first model parameter can match a corresponding child node device, and the model training progress is ensured.

Further, the parameters of the first network layer and the part of parameters of the second network layer are specifically selected as the first model parameters, so that a requirement of the model application scenario on a network layer is considered, and model training performance is ensured.

Further, the central node device determines, based on the model application scenario, the first network layer required for constructing the model, so that the requirement of the model application scenario on the network layer is considered, and the model training performance is ensured.

Further, the child node device whose capability information includes the model type of the model is determined as the target device to which the first indication information and the model are sent, so that it is ensured that all child node devices that participate in training can train the model, and the model training progress is ensured.

Further, it is designed that the second model parameter cannot affect the preset fusion algorithm of the fused parameter, and cannot participate in calculation of the fused parameter, so that the second model parameter that is not updated cannot affect model training, and the model training performance is ensured. It is further designed that the second model parameter can affect the preset fusion algorithm of the fused parameter, and can participate in calculation of the fused parameter, so that the determined fused parameter can participate in model training, and the model training progress is ensured.

FIG. 13 is a diagram of a structure of a communication apparatus 130. The communication apparatus is used in a child node device. Modules in the apparatus shown in FIG. 13 have functions of implementing corresponding steps in FIG. 8, and can achieve corresponding technical effect. For beneficial effect corresponding to steps performed by the modules, refer to the descriptions of the corresponding steps in FIG. 8. Details are not described again. The functions may be implemented by hardware, or may be implemented by hardware by executing corresponding software. The hardware or the software includes one or more modules corresponding to the functions. The communication apparatus may be a chip or a system on chip in the child node device. For example, the communication apparatus includes:

a sending module 131, configured to send, to a central node device, capability information representing a capability of training a model by the child node device;

a receiving module 132, configured to receive, from the central node device, the model and first indication information indicating a first model parameter to be updated when the child node device trains the model, where the to-be-updated first model parameter of the child node device is determined based on the capability information of the child node device; and

a processing module 133, configured to train the model based on a training set (including beam information collected by the child node device) and the to-be-updated model parameter, to obtain an updated first model parameter, where

the sending module 131 is configured to send the updated first model parameter to the central node device;

the receiving module 132 is configured to receive, from the central node device, a fused parameter calculated based on the updated first model parameter;

the processing module 133 is configured to train the model based on the fused parameter;

the receiving module 132 is configured to receive the beam information; and

the processing module 133 is configured to: input the beam information into the model, and output target beam information.

In this embodiment of this application, the plurality of child node devices first send the capability information to the central node device, and then the central node device sends the first indication information and the model to each of the plurality of child node devices based on the capability information. Then, the plurality of child node devices train the model based on training sets and to-be-updated model parameters, to obtain the updated first model parameters. In addition, the central node device fuses, by using the preset fusion algorithm, the global model parameters that include the first model parameters and that are of the plurality of child node devices, to obtain the fused parameter; and then the plurality of child node devices train the model based on the fused parameter. In this way, when the child node device trains the model, a part of parameters are frozen and do not participate in training. Therefore, during model training, a model training progress is not affected by a central node device with a low computing power, and model training efficiency is high.

Further, the model training durations of the plurality of child node devices are first separately predicted based on the capability information, and then the first model parameters of the child node devices are determined based on the model training durations, so that the determined to-be-trained first model parameters can match the corresponding child node devices, and the model training progress is ensured.

Further, based on different comparison results between the model training duration and the preset duration condition, two policies are correspondingly used: selecting the part of parameters of the model as the first model parameters, and selecting all the parameters of the model as the first model parameters, so that model performance is ensured while the model training progress is ensured.

Further, the part of parameters of the model are randomly selected as the first model parameters, so that the determined to-be-trained first model parameter can match a corresponding child node device, and the model training progress is ensured.

Further, the parameters of the first network layer and the part of parameters of the second network layer are specifically selected as the first model parameters, so that a requirement of the model application scenario on a network layer is considered, and model training performance is ensured.

Further, the central node device determines, based on the model application scenario, the first network layer required for constructing the model, so that the requirement of the model application scenario on the network layer is considered, and the model training performance is ensured.

Further, the child node device whose capability information includes the model type of the model is determined as the target device to which the first indication information and the model are sent, so that it is ensured that all child node devices that participate in training can train the model, and the model training progress is ensured.

Further, it is designed that the second model parameter cannot affect the preset fusion algorithm of the fused parameter, and cannot participate in calculation of the fused parameter, so that the second model parameter that is not updated cannot affect model training, and the model training performance is ensured. It is further designed that the second model parameter can affect the preset fusion algorithm of the fused parameter, and can participate in calculation of the fused parameter, so that the determined fused parameter can participate in model training, and the model training progress is ensured.

FIG. 14 is a diagram of a structure of a communication system according to an embodiment of this application. The communication system is a communication system corresponding to a model training scenario. As shown in FIG. 14, the communication system may include a central node device 140 and a child node device 141. The central node device 140 may have a function of the communication apparatus 120, and the child node device 141 may have a function of the communication apparatus 130.

Specifically, the central node device 140 performs the following steps:

receiving, from a plurality of child node devices (child node devices that participate in federated learning of a model), capability information representing capabilities of training the model by the child node devices; sending, to each of the plurality of child node devices, the model and first indication information indicating a first model parameter (determined based on capability information of the child node device) to be updated when the child node device trains the model; receiving updated first model parameters from the plurality of child node devices; fusing global model parameters (including the updated first model parameters and second model parameters other than the first model parameters in the model) of the plurality of child node devices by using a preset fusion algorithm, to obtain a fused parameter; and sending the fused parameter to the plurality of child node devices.

In this embodiment of this application, the plurality of child node devices first send the capability information to the central node device, and then the central node device sends the first indication information and the model to each of the plurality of child node devices based on the capability information. Then, the plurality of child node devices train the model based on training sets and to-be-updated model parameters, to obtain the updated first model parameters. In addition, the central node device fuses, by using the preset fusion algorithm, the global model parameters that include the first model parameters and that are of the plurality of child node devices, to obtain the fused parameter; and then the plurality of child node devices train the model based on the fused parameter. In this way, when the child node device trains the model, a part of parameters are frozen and do not participate in training. Therefore, during model training, a model training progress is not affected by a central node device with a low computing power, and model training efficiency is high.

In a possible implementation, the central node device 140 further performs the following steps:

separately predicting model training durations of the plurality of child node devices based on the capability information; and determining the first model parameters of the child node devices based on the model training durations.

In this embodiment of this application, the model training durations of the plurality of child node devices are first separately predicted based on the capability information, and then the first model parameters of the child node devices are determined based on the model training durations, so that the determined to-be-trained first model parameters can match the corresponding child node devices, and the model training progress is ensured.

In a possible implementation, the determining the first model parameters of the child node devices based on the model training durations includes:

when the model training durations do not meet a preset duration condition, selecting a part of parameters of the model as the first model parameters; or when the model training durations meet a preset duration condition, selecting all parameters of the model as the first model parameters.

In this embodiment of this application, based on different comparison results between the model training duration and the preset duration condition, two policies are correspondingly used: selecting the part of parameters of the model as the first model parameters, and selecting all the parameters of the model as the first model parameters, so that model performance is ensured while the model training progress is ensured.

In a possible implementation, the selecting a part of parameters of the model as the first model parameters includes:

randomly selecting the part of parameters of the model as the first model parameters.

In this embodiment of this application, the part of parameters of the model are randomly selected as the first model parameters, so that the determined to-be-trained first model parameter can match a corresponding child node device, and the model training progress is ensured.

In a possible implementation, the model includes a first network layer (where a model application scenario indicates the first network layer) and a second network layer, and the first network layer and the second network layer are different; and the selecting a part of parameters of the model as the first model parameter includes:

selecting parameters of the first network layer and a part of parameters of the second network layer as the first model parameters.

In this embodiment of this application, the parameters of the first network layer and the part of parameters of the second network layer are specifically selected as the first model parameters, so that a requirement of the model application scenario on a network layer is considered, and model training performance is ensured.

In a possible implementation, before selecting parameters of a preset first network layer in the first network layer as the first model parameters, the central node device 140 further performs the following step:

determining, based on the model application scenario, the first network layer required for constructing the model.

In this embodiment of this application, the central node device determines, based on the model application scenario, the first network layer required for constructing the model, so that the requirement of the model application scenario on the network layer is considered, and the model training performance is ensured.

In a possible implementation, the capability information further represents types of models that can be trained by the child node devices, and the central node device 140 further performs the following step: determining a child node device whose capability information includes a model type of the model as a target device to which the first indication information and the model are sent.

In this embodiment of this application, the child node device whose capability information includes the model type of the model is determined as the target device to which the first indication information and the model are sent, so that it is ensured that all child node devices that participate in training can train the model, and the model training progress is ensured.

In a possible implementation, the fusing global model parameters of the plurality of child node devices by using a preset fusion algorithm, to obtain a fused parameter includes: for model parameters with a same function of different child node devices, setting weights of the second model parameters to a first preset weight value, setting weights of the first model parameters to a second preset weight value, and performing weighted averaging to obtain the fused parameter; or for model parameters with a same function of different child node devices, setting both weights of the second model parameters and weights of the first model parameters to a second preset weight value, and performing weighted averaging to obtain the fused parameter. The parameters of the first network layer and the part of parameters of the second network layer are selected as the first model parameters.

In this embodiment of this application, the parameters of the first network layer and the part of parameters of the second network layer are specifically selected as the first model parameters, so that a requirement of the model application scenario on a network layer is considered, and model training performance is ensured.

In a possible implementation, before selecting parameters of a preset first network layer in the first network layer as the first model parameters, the central node device 140 further performs the following step: determining, based on the model application scenario, the first network layer required for constructing the model.

In this embodiment of this application, the central node device determines, based on the model application scenario, the first network layer required for constructing the model, so that the requirement of the model application scenario on the network layer is considered, and the model training performance is ensured.

In a possible implementation, the capability information further represents types of models that can be trained by the child node devices, and the central node device 140 further performs the following step: determining a child node device whose capability information includes a model type of the model as a target device to which the first indication information and the model are sent.

In this embodiment of this application, the child node device whose capability information includes the model type of the model is determined as the target device to which the first indication information and the model are sent, so that it is ensured that all child node devices that participate in training can train the model, and the model training progress is ensured.

In a possible implementation, the fusing global model parameters of the plurality of child node devices by using a preset fusion algorithm, to obtain a fused parameter includes: for model parameters with a same function of different child node devices, setting weights of the second model parameters to a first preset weight value, setting weights of the first model parameters to a second preset weight value, and performing weighted averaging to obtain the fused parameter; or for model parameters with a same function of different child node devices, setting both weights of the second model parameters and weights of the first model parameters to a second preset weight value, and performing weighted averaging to obtain the fused parameter.

In this embodiment of this application, it is designed that the second model parameter cannot affect the preset fusion algorithm of the fused parameter, and cannot participate in calculation of the fused parameter, so that the second model parameter that is not updated cannot affect model training, and the model training performance is ensured. It is further designed that the second model parameter can affect the preset fusion algorithm of the fused parameter, and can participate in calculation of the fused parameter, so that the determined fused parameter can participate in model training, and the model training progress is ensured.

The child node device 141 performs the following steps: sending, to the central node device, capability information representing a capability of training a model by the child node device; receiving, from the central node device, the model and first indication information indicating a first model parameter to be updated when the child node device trains the model, where the to-be-updated first model parameter of the child node device is determined based on the capability information of the child node device; training the model based on the to-be-updated model parameter and a training set including beam information collected by the child node device, to obtain an updated first model parameter; sending the updated first model parameter to the central node device; receiving, from the central node device, a fused parameter calculated based on the updated first model parameter; training the model based on the fused parameter; receiving the beam information; and inputting the beam information into the model, and outputting target beam information.

In this embodiment of this application, a target beam is selected by using the model, and efficiency of selecting the target beam is high.

An embodiment of this application further provides a computer-readable storage medium. All or some of the procedures in the foregoing method embodiments may be completed by a computer program instructing related hardware. The program may be stored in the computer-readable storage medium. When the program is executed, the procedures of the foregoing method embodiments may be included. The computer-readable storage medium may be an internal storage unit of the terminal apparatus in any one of the foregoing embodiments, for example, including a data transmitting end and/or a data receiving end. For example, the computer-readable storage medium may be a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both the internal storage unit and the external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or some of the procedures in the foregoing method embodiments may be completed by the computer instructions instructing related hardware (for example, a computer, a processor, a network device, and a terminal). A program may be stored in the foregoing computer-readable storage medium.

An embodiment of this application further provides a chip system. The chip system may include a chip, or may include a chip and another discrete component. This is not limited. The chip system includes a processor and a transceiver. All or some of the procedures in the foregoing method embodiments may be completed by the chip system. For example, the chip system may be configured to implement a function performed by the central node device in the foregoing method embodiments, or implement a function performed by the child node device in the foregoing method embodiments.

In a possible design, the chip system further includes a memory. The memory is configured to store program instructions and/or data. When the chip system runs, the processor executes the program instructions stored in the memory, to enable the chip system to perform the function performed by the central node device in the foregoing method embodiments or perform the function performed by the child node device in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. Alternatively, the memory in embodiments of this application may be a circuit or any other apparatus that can implement a storage function, and is configured to store instructions and/or data.

It should be noted that, in the specification, claims, and accompanying drawings of this application, terms "first", "second", and the like are intended to distinguish between different objects but do not indicate a particular order. In addition, terms "include", "have", and any other variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

It should be understood that, in embodiments of this application, "at least one (item)" means one or more, "a plurality of" means two or more, "at least two (items)" means two, three, or more, and "and/or" is used to describe an association relationship between associated objects and indicates that there may be three relationships. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. **In** addition, "connection" in embodiments of this application means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, "network" and "system" express a same concept, and a communication system is a communication network.

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, in other words, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes several instructions for instructing a device, for example, a single-chip microcomputer or a chip, or a processor (processor) to perform all or some of the steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A model training method, wherein the method is applied to a central node device, and comprises:

receiving capability information from a plurality of child node devices, wherein the capability information of the child node devices represents capabilities of training a model by the child node devices, and the plurality of child node devices are node devices that participate in federated learning of the model;
sending first indication information and the model to each of the plurality of child node devices, wherein the first indication information indicates first model parameters to be updated when the child node devices train the model, and the to-be-updated first model parameters of the child node devices are determined based on the capability information of the child node devices;

receiving updated first model parameters from the plurality of child node devices;

fusing global model parameters of the plurality of child node devices by using a preset fusion algorithm, to obtain a fused parameter, wherein the global model parameters comprise the updated first model parameters and second model parameters other than the first model parameters in the model; and

sending the fused parameter to the plurality of child node devices.

2. The method according to claim 1, wherein the method further comprises:

separately predicting model training durations of the plurality of child node devices based on the capability information; and

determining the first model parameters of the child node devices based on the model training durations.

3. The method according to claim 2, wherein the determining the first model parameters of the child node devices based on the model training durations comprises:

when the model training durations do not meet a preset duration condition, selecting a part of parameters of the model as the first model parameters; or

when the model training durations meet a preset duration condition, selecting all parameters of the model as the first model parameters.

4. The method according to claim 3, wherein the selecting a part of parameters of the model as the first model parameters comprises:

randomly selecting the part of parameters of the model as the first model parameters.

5. The method according to claim 3, wherein the model comprises a first network layer and a second network layer, a model application scenario indicates the first network layer, and the first network layer and the second network layer are different; and

the selecting a part of parameters of the model as the first model parameters comprises:

selecting parameters of the first network layer and a part of parameters of the second network layer as the first model parameters.

6. The method according to claim 5, wherein before selecting parameters of a preset first network layer in the first network layer are selected as the first model parameters, the method further comprises:

determining, based on the model application scenario, the first network layer required for constructing the model.

7. The method according to any one of claims 1 to 6, wherein the capability information further represents types of models that can be trained by the child node devices, and the method further comprises:

determining a child node device whose capability information comprises a model type of the model as a target device to which the first indication information and the model are sent.

8. The method according to any one of claims 1 to 7, wherein the fusing global model parameters of the plurality of child node devices by using a preset fusion algorithm, to obtain a fused parameter comprises:

for model parameters with a same function of different child node devices, setting weights of the second model parameters to a first preset weight value, setting weights of the first model parameters to a second preset weight value, and performing weighted averaging to obtain the fused parameter; or

for model parameters with a same function of different child node devices, setting both weights of the second model parameters and weights of the first model parameters to a second preset weight value, and performing weighted averaging to obtain the fused parameter.

9. A beam information selection method, wherein the method is applied to a child node device, and comprises:

receiving beam information; and

inputting the beam information into a model, and outputting target beam information, wherein the model is obtained through training according to the method according to any one of claims 1 to 8.

10. A model training method, wherein the method is applied to a child node device, and comprises:

sending capability information to a central node device, wherein the capability information of the child node device represents a capability of training a model by the child node device;

receiving first indication information and the model from the central node device, wherein the first indication information indicates a first model parameter to be updated when the child node device trains the model, and the to-be-updated first model parameter of the child node device is determined based on the capability information of the child node device;

training the model based on a training set and the to-be-updated model parameter, to obtain an updated first model parameter, wherein the training set comprises beam information collected by the child node device;

sending the updated first model parameter to the central node device;

receiving a fused parameter from the central node device, wherein the fused parameter is calculated based on the updated first model parameter; and

training the model based on the fused parameter.

11. A model training apparatus, wherein the apparatus is used in a central node device, and comprises:

a receiving module, configured to receive capability information from a plurality of child node devices, wherein the capability information of the child node devices represents capabilities of training a model by the child node devices, and the plurality of child node devices are node devices that participate in federated learning of the model;

a sending module, configured to send first indication information and the model to each of the plurality of child node devices, wherein the first indication information indicates first model parameters to be updated when the child node devices train the model, and the to-be-updated first model parameters of the child node devices are determined based on the capability information of the child node devices, wherein

the receiving module is further configured to receive updated first model parameters from the plurality of child node devices; and

a processing module, configured to fuse global model parameters of the plurality of child node devices by using a preset fusion algorithm, to obtain a fused parameter, wherein the global model parameters comprise the updated first model parameters and second model parameters other than the first model parameters in the model, wherein

the processing module is further configured to send the fused parameter to the plurality of child node devices.

12. The apparatus according to claim 11, wherein the processing module is specifically configured to:

separately predict model training durations of the plurality of child node devices based on the capability information; and

determine the first model parameters of the child node devices based on the model training durations.

13. The apparatus according to claim 12, wherein the processing module is specifically configured to:

when the model training durations do not meet a preset duration condition, select a part of parameters of the model as the first model parameters; or

when the model training durations meet a preset duration condition, select all parameters of the model as the first model parameters.

14. The apparatus according to claim 13, wherein the processing module is specifically configured to: randomly select the part of parameters of the model as the first model parameters.

15. The apparatus according to claim 13, wherein the model comprises a first network layer and a second network layer, a model application scenario indicates the first network layer, and the first network layer and the second network layer are different; and the processing module is specifically configured to: select parameters of the first network layer and a part of parameters of the second network layer as the first model parameters.

16. The apparatus according to claim 15, wherein the processing module is further configured to: before selecting parameters of a preset first network layer in the first network layer as the first model parameters, determine, based on the model application scenario, the first network layer required for constructing the model.

17. The apparatus according to any one of claims 11 to 16, wherein the capability information further represents types of models that can be trained by the child node devices, and the processing module is further configured to: determine a child node device whose capability information comprises a model type of the model as a target device to which the first indication information and the model are sent.

18. The apparatus according to any one of claims 11 to 17, wherein the processing module is specifically configured to:

for model parameters with a same function of different child node devices, set weights of the second model parameters to a first preset weight value, set weights of the first model parameters to a second preset weight value, and perform weighted averaging to obtain the fused parameter; or

for model parameters with a same function of different child node devices, set both weights of the second model parameters and weights of the first model parameters to a second preset weight value, and perform weighted averaging to obtain the fused parameter.

19. A communication apparatus, wherein the apparatus is used in a child node device, and comprises:

   a receiving module, configured to receive beam information; and
   a processing module, configured to: input the beam information into a model, and output target beam information, wherein the model is obtained through training by the apparatus according to any one of claims 11 to 18.

20. A communication apparatus, wherein the apparatus is used in a child node device, and comprises:

   a sending module, configured to send capability information to a central node device, wherein the capability information of the child node device represents a capability of training a model by the child node device;
   a receiving module, configured to receive first indication information and the model from the central node device, wherein the first indication information indicates a first model parameter to be updated when the child node device trains the model, and the to-be-updated first model parameter of the child node device is determined based on the capability information of the child node device; and
   a processing module, configured to train the model based on a training set and the to-be-updated model parameter, to obtain an updated first model parameter, wherein the training set comprises beam information collected by the child node device, wherein
   the sending module is configured to send the updated first model parameter to the central node device;
   the receiving module is configured to receive a fused parameter from the central node device, wherein the fused parameter is calculated based on the updated first model parameter; and
   the processing module is configured to train the model based on the fused parameter.

21. A communication apparatus, wherein the communication apparatus comprises a processor and a transceiver, and the processor and the transceiver are configured to support the communication apparatus in performing the method according to any one of claims 1 to 10.

22. A computer-readable storage medium, wherein the computer-readable storage medium comprises computer instructions; and when the computer instructions are run, the method according to any one of claims 1 to 10 is performed.

$$x_0$$

$$w_0 x_0$$

Neuron

$$w_1 x_1$$

$$y = f(\sum_{i=0}^{n} w_i x_i + b)$$

$$y$$

$$w_2 x_2$$

FIG. 1

Neuron    Layer    Weight value

Input layer

Hidden layer

Output layer

FIG. 2

FIG. 3

FIG. 4-a

FIG. 4-b

FIG. 5

FIG. 6

FIG. 7

| Child node device | | Central node device |
|---|---|---|

S801: Capability information →

S802: First indication information and model ←

S803: Train the model based on a training set and a to-be-updated model parameter, to obtain an updated first model parameter

S804: Updated first model parameter →

S805: Fuse global model parameters of a plurality of child node devices by using a preset fusion algorithm, to obtain a fused parameter

← S806: Fused parameter

S807: Train the model based on the fused parameter

FIG. 8

Input

Conv1

Conv2

16 neurons

64 neurons

Loss function

Loss function

FIG. 9

S101

Receive beam information

S102

Input the beam information into a model, and output target beam information

FIG. 10

1107

1101

Processor

CPU 0

CPU 1

Processor

CPU 0

CPU 1

Communication line 1102

1104

Memory

1106

Input device

1105

Output device

1103

Transceiver

FIG. 11

Receiving module 121

Sending module 122

Processing module 123

FIG. 12

Sending module 131

Receiving module 132

Processing module 133

FIG. 13

Central node device 140

Child node device 141

FIG. 14

## INTERNATIONAL SEARCH REPORT

| International application No. |
|---|
| **PCT/CN2023/104254** |

### A. CLASSIFICATION OF SUBJECT MATTER

G06N20/00(2019.01)i

According to International Patent Classification (IPC) or to both national classification and IPC

### B. FIELDS SEARCHED

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNTXT; CNABS; VEN; USTXT; EPTXT; WOTXT; CNKI; IEEE: 联邦学习, 能力, 计算, 算力, 电量, 内存, 性能, 硬件, 资源, 带宽, 模型, 更新, 梯度, 参数, 部分, 全部, 确定, 选择, federal learning, capability, compute, computing power, electric quantity, memory, performance, hardware, resource, bandwidth, model, update, gradient, parameter, part, all, determine, select

### C. DOCUMENTS CONSIDERED TO BE RELEVANT

| Category* | Citation of document, with indication, where appropriate, of the relevant passages | Relevant to claim No. |
|---|---|---|
| X | CN 111310932 A (SHENZHEN QIANHAI WEBANK CO., LTD.) 19 June 2020 (2020-06-19) description, paragraphs 45-163 | 1-22 |
| X | CN 114444708 A (HUAWEI TECHNOLOGIES CO., LTD.) 06 May 2022 (2022-05-06) description, paragraphs 89-231 | 1-22 |
| X | CN 114386570 A (SUN YAT-SEN UNIVERSITY) 22 April 2022 (2022-04-22) description, paragraphs [0042]-[0076] | 1-22 |
| X | CN 112818207 A (SHENZHEN QIANHAI WEBANK CO., LTD.) 18 May 2021 (2021-05-18) description, paragraphs 58-200 | 1-22 |
| A | US 2021406782 A1 (TIESET INC.) 30 December 2021 (2021-12-30) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2023** | **19 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104254**

| Patent document cited in search report | | | Publication date (day/month/year) | Patent family member(s) | | | Publication date (day/month/year) |
|---|---|---|---|---|---|---|---|
| CN | 111310932 | A | 19 June 2020 | None | | | |
| CN | 114444708 | A | 06 May 2022 | None | | | |
| CN | 114386570 | A | 22 April 2022 | None | | | |
| CN | 112818207 | A | 18 May 2021 | None | | | |
| US | 2021406782 | A1 | 30 December 2021 | WO | 2022005937 | A1 | 06 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210872876X